(19) Europäisches Patentamt
European Patent Office
Office européen des brevets

(11)  EP 2 603 971 B1

(12)  **EUROPÄISCHE PATENTSCHRIFT**

(45) Veröffentlichungstag und Bekanntmachung des Hinweises auf die Patenterteilung:
**10.12.2014  Patentblatt 2014/50**

(21) Anmeldenummer: **11728187.3**

(22) Anmeldetag: **24.06.2011**

(51) Int Cl.:
*H02P 7/00* (2006.01)      *H02P 7/29* (2006.01)
*H02P 6/00* (2006.01)      *H02P 6/12* (2006.01)
*H02P 6/18* (2006.01)

(86) Internationale Anmeldenummer:
**PCT/EP2011/003141**

(87) Internationale Veröffentlichungsnummer:
**WO 2012/019669 (16.02.2012 Gazette 2012/07)**

(54)  **ELEKTRONISCH KOMMUTIERTER MOTOR**

ELECTRONICALLY COMMUTATED MOTOR

MOTEUR À COMMUTATION ÉLECTRONIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **10.08.2010  DE 102010034481**

(43) Veröffentlichungstag der Anmeldung:
**19.06.2013  Patentblatt 2013/25**

(73) Patentinhaber: **Ebm-Papst St. Georgen GmbH & CO. KG**
**78112 St. Georgen (DE)**

(72) Erfinder:
• **DUFNER, Thomas**
  **78136 Schonach (DE)**
• **HELLER, Frank**
  **78126 Königsfeld-Burgberg (DE)**

(74) Vertreter: **Raible, Tobias et al**
**Raible & Raible**
**Patentanwälte**
**Bolzstrasse 3**
**70173 Stuttgart (DE)**

(56) Entgegenhaltungen:
EP-A2- 2 086 104      EP-A2- 2 107 677
DE-A1- 10 161 992     JP-A- 9 037 586
JP-A- 11 075 396

**Beschreibung**

Die Erfindung betrifft einen elektronisch kommutierten Motor mit einem ersten Anschluss zum Anschließen an einen positiven Pol einer Gleichspannungsquelle, und mit einem zweiten Anschluss zum Anschließen an einen negativen Pol dieser Gleichspannungsquelle. Ein solcher Motor hat einen Stator mit einer Statorwicklungsanordnung, die mindestens einen Wicklungsstrang aufweist, und er hat eine Erfassungsanordnung zur Erfassung eines aus der Gleichspannungsquelle dem Motor zugeführten Stromes, welcher Strom im Betrieb vom ersten Anschluss durch die Erfassungsanordnung zum zweiten Anschluss fließt.

Solche Motoren gibt es in vielen Varianten, z.B. einphasig oder mehrphasig. Die Kommutierung erfolgt meistens mittels eines Rotorstellungssensors, gewöhnlich eines Hallsensors. Bekannt ist auch eine Kommutierung mittels der Spannung, die im Betrieb in der Statorwicklungsanordnung induziert wird. Letztere Art der Kommutierung wird gewöhnlich unter dem Stichwort "Sensorless" zusammengefasst.

Die EP 2 086 104 A2 zeigt einen elektronisch kommutierten Motor mit einer H-Brücke und einem Rotorstellungssensor, der ein Ausgangssignal erzeugt. In Abhängigkeit vom Ausgangssignal werden zu einem Zeitpunkt t2' die unteren Schalter der H-Brücke leitend geschaltet, und durch das hierdurch resultierende Stromkreisen wird die elektrische Energie in mechanische Energie umgewandelt, so dass zu einem Zeitpunkt t3' bzw. t1 eine Kommutierung in Abhängigkeit vom Ausgangssignal erfolgen kann, bei der keiner oder nur ein geringer Strom durch die Wicklung fließt. Der Zeitpunkt t2' wird optimiert, indem der Strom durch die Wicklung nach der Kommutierung gemessen und ausgewertet wird.

Die EP 2 107 677 A2 zeigt ein Startverfahren für einen elektronisch kommutierten Motor mit einer H-Brücke und einem Rotorstellungssensor, der ein Ausgangssignal erzeugt. Die H-Brücke wird mit einem PWM-Signal angesteuert, und das Tastverhältnis des PWM-Signals wird beim Start in Abhängigkeit von der Betriebsspannung gewählt, um bei unterschiedlichen Betriebsspannungen einen sicheren Start zu ermöglichen. Nach dem Start wird das PWM-Signal durch einen Drehzahlregler vorgegeben.

Die DE 101 61 992 zeigt einen elektronisch kommutierten Gleichstrommotor mit einem Rotorstellungssensor, der ein Ausgangssignal erzeugt. Ausgehend von der augenblicklichen Drehzahl wird ein Abschaltzeitpunkt errechnet, und bei Erreichen dieses Abschaltzeitpunkts wird die Energiezufuhr unterbrochen. Dann wird die abzuschaltende Wicklung über zwei bidirektional arbeitende Halbleiterschalter im wesentlichen im Kurzschluss betrieben, und der abklingende Strom wird überwacht. Wenn er einen reduzierten Wert erreicht hat, werden die Wicklungsanschlüsse der Wicklung vorübergehend hochohmig geschaltet, bevor der darauffolgende Stromimpuls beginnt.

Es ist eine Aufgabe der Erfindung, einen neuen elektronisch kommutierten Motor bereitzustellen.

Diese Aufgabe wird nach der Erfindung gelöst durch den Gegenstand des Patentanspruchs 1.

Ein elektronisch kommutierter Motor weist auf:

Einen ersten Anschluss zum Anschließen an einen positiven Pol einer Gleichspannungsquelle;
einen zweiten Anschluss zum Anschließen an einen negativen Pol dieser Gleichspannungsquelle;
einen Stator mit einer Statorwicklungsanordnung, welche mindestens einen Wicklungsstrang aufweist;
einen permanentmagnetischen Rotor welcher im Betrieb bei seiner Drehung die Form des Stromes in der Statorwicklungsanordnung beeinflusst;
eine Erfassungsanordnung, welche dazu ausgebildet ist, einen aus der Gleichspannungsquelle dem Motor zugeführten Strom in zeitlichen Abständen zu erfassen und zu digitalisieren,
welcher Strom im Betrieb vom ersten Anschluss durch die Erfassungsanordnung zum zweiten Anschluss fließt,
wobei der Absolutwert des Motorstroms im Betrieb verschiedene Abschnitte aufweist, wie folgt:

einen ersten Abschnitt, im Folgenden Stromrücken genannt, der ausgehend von der Kommutierung bis zu einem Maximum des Absolutwerts ansteigt,
einen zweiten Abschnitt, im Folgenden Stromsattel genannt, der ausgehend vom Maximum bis zu einem Minimum des Absolutwerts absinkt,
einen dritten Abschnitt, im Folgenden Stromschwanz genannt, der sich an den Stromsattel anschließt;
und einen programmgesteuerten Rechner, welcher zur Ausführung folgender Schritte ausgebildet ist:

a) aus den digitalisierten Stromwerten wird die Lage des Stromrückens ermittelt;
b) aus den digitalisierten Stromwerten wird die Lage des Stromsattels ermittelt;
c) ausgehend von den erfassten Stromwerten an Strom rücken und/oder Stromsattel wird ein Stromwert ermittelt, bei dem ein Kommutierungsvorgang beginnen soll;
d) wenn der Motorstrom diesen Stromwert erreicht oder überschreitet, wird der Kommutierungsvorgang eingeleitet.

Durch Erfassung, Digitalisierung und Auswertung der Form des digitalisierten Wicklungsstromes, besonders bei konstanter Versorgungsspannung, lässt sich in überraschender Weise die Kommutierung sehr gut steuern, auch ohne Verwendung eines Rotorstellungssensors oder des Sensorless-Prinzips, und dadurch ist eine elektronische Kommutierung möglich, die sehr variabel ist und leistungsarm arbeitet. Dies gilt besonders bei Verwendung in sogenannten Weitbereichsmotoren, z.B. für einen Spannungsbereich von 20 bis 160 V, wie er für mobile Anwendungen charakteristisch ist, z.B. für Gabelstapler, Rangier- oder Grubenlokomotiven, die aus einer Batterie mit elektrischer Energie versorgt werden und bei denen die Batteriespannung stark schwanken kann. Ebenso gilt dies bei Verwendung einer gleichgerichteten Wechselspannung als Versorgungsspannung.

Hierbei werden beispielsweise zuerst die Lage des Stromrückens und die Stromamplitude am Maximum des Strom rückens ermittelt. Anschließend wird im Bereich des Stromsattels das dortige Minimum des Stromes erfasst, ggf. auch dessen Amplitude. Wenn das Minimum durchlaufen und ein Wert für die Höhe des Stromes ermittelt worden ist, der eine einen Kommutierungsvorgang auslösen soll, wird dieser dann ausgelöst, wenn der Motorstrom diesen berechneten Wert erreicht oder überschritten hat. Dabei lässt sich dieser den Kommutierungsvorgang auslösende Stromwert je nach den Bedürfnissen mathematisch manipulieren, z.B. in der Form, dass beim Start die Kommutierung spät erfolgt und mit zunehmender Drehzahl immer mehr in Richtung früh verschoben wird.

Die Kommutierung ohne Rotorstellungssensor hat den Vorteil, dass die Elektronik des Motors auch im Abstand vom Motor angeordnet werden kann, so dass Bauteile der Elektronik auch für andere Aufgaben verwendet werden können. Z.B. kann ein im Motor verwendeter Mikroprozessor auch für Regelaufgaben verwendet werden, z.B. für eine Temperaturregelung. Bei Bedarf kann so der Motor kleiner gebaut werden.

Bevorzugt ist der programmgesteuerte Rechner zur Durchführung folgender Schritte ausgebildet:

a) die Absolutwerte zeitlich einander folgender digitalisierter Stromwerte werden verglichen, um durch die Vergleiche ein im Bereich des Stromrückens auftretendes Maximum zu ermitteln und einen diesem Maximum zugeordneten digitalisierten Stromwert (Max) zu speichern;

b) zeitlich nacheinander ermittelte digitalisierte Werte werden verglichen, um ein auf dieses Maximum folgendes Minimum des Absolutwerts im Bereich des Stromsattels zu ermitteln.

Bevorzugt ist der programmgesteuerte Rechner zur Durchführung folgender Schritte ausgebildet: Nach der Ermittlung des Maximums im Bereich des Stromrückens wird abgewartet, bis die Differenz zwischen dem diesem Maximum zugeordneten Stromwert und dem augenblicklichen Stromwert einen vorgegebenen Mindestwert erreicht hat, bevor das auf dieses Maximum folgende Minimum des Absolutwerts ermittelt wird.

Bevorzugt wird dann, wenn der vorgegebene Mindestwert nicht ermittelbar ist, die Ermittlung des Minimums durch eine vorgegebene Korrekturmaßnahme ersetzt.

Bevorzugt wird als Korrekturmaßnahme der Strom in der Statorwicklungsanordnung auf eine Stromrichtung umgesteuert, welche einer anderen Drehrichtung zugeordnet ist.

Bevorzugt wird als Korrekturmaßnahme der Motor mindestens zeitweise stromlos gemacht, um eine Überhitzung bei einer Blockierung des Motors zu verhindern.

Bevorzugt ist zur Messung der Versorgungsspannung eine Messvorrichtung vorgesehen, welche dazu ausgebildet ist, einen von dieser Spannung abhängigen Wert zu digitalisieren.

Bevorzugt ist mindestens ein Element der H-Brücke durch ein PWM-Signal steuerbar, dessen Tastverhältnis eine Größe hat, die bei einer Änderung der Versorgungsspannung des Motors diese Spannungsänderung mindestens nahezu kompensiert, um dem Motor im Betrieb eine etwa konstante Gleichspannung zuzuführen.

Bevorzugt ist der programmgesteuerte Rechner dazu ausgebildet, nach dem Einschalten des Motors eine Messung der Versorgungsspannung durchzuführen, um zu diesem Zeitpunkt ein geeignetes Tastverhältnis des PWM-Signals ermitteln und einstellen zu können.

Bevorzugt ist der programmgesteuerte Rechner dazu ausgebildet, die Messung der Versorgungsspannung auch nach dem Einschalten des Motors fortzusetzen, um bei einer Änderung der Versorgungsspannung das Tastverhältnis des PWM-Signals auch im Lauf des Motors an die augenblickliche Höhe der Versorgungsspannung anzupassen.

Bevorzugt ist im Betrieb mindestens ein Element der H-Brücke durch ein PWM-Signal ein- und ausschaltbar, so dass im eingeschalteten Zustand dieses Elements im Betrieb ein Strom vom ersten Anschluss über dieses Element und die Erfassungsanordnung zum zweiten Anschluss fließt, welcher Strom durch die Erfassungsanordnung erfassbar ist, und im ausgeschalteten Zustand dieses Elements ein abnehmender Kreisstrom in der H-Brücke fließt.

Bevorzugt weist die Messanordnung einen Kondensator auf, dessen Ladespannung im eingeschalteten Zustand des genannten Elements eine Funktion des von der Erfassungsanordnung erfassten Motorstroms ist und ihrerseits als Grundlage für die Erfassung und Digitalisierung des Motorstroms dient, und dem eine Entladeschaltung zugeordnet ist, um während des Fließens eines Kreisstroms eine abnehmende Ladespannung am Kondensator zu erzeugen, die als Basis für die Strommessung während des Fließens dieses Kreisstroms geeignet ist.

Bevorzugt nimmt im Betrieb der Kreisstrom gemäß einer ersten Zeitkonstante ab, die hauptsächlich durch die elektrischen Daten des Wicklungsstranges beeinflusst ist, durch welchen dieser Kreisstrom fließt, und die Ladespannung nimmt im Betrieb mit einer hieran angepassten zweiten Zeitkonstante ab, die durch die elektrischen Daten des Kondensators und seines Entladekreises beeinflusst ist.

Bevorzugt sind die erste Zeitkonstante und die zweite Zeitkonstante aufeinander abgestimmt, so dass während des Fließens eines Kreisstroms eine Ladespannung am Kondensator erfassbar ist, welche einen vergleichbar abnehmenden Verlauf hat wie der abnehmende Kreisstrom.

Bevorzugt ist der Verlauf der Ladespannung des Kondensators um einen Amplituden-Offset gegenüber dem Verlauf des in der Erfassungsvorrichtung fließenden Stromes versetzt.

Bevorzugt ist durch den Amplituden-Offset die zu digitalisierende Spannung in einen anderen Messbereich des zugeordneten A/D-Wandlers verschoben.

Bevorzugt wird mindestens ein ermittelter Stromwert vor seiner Verwendung einer Plausibilitätsprüfung unterzogen.

Bevorzugt ist eine H-Brückenschaltung vorgesehen, welche zwei Halbbrücken aufweist, in deren Brückendiagonale ein Wicklungsstrang des Motors angeordnet ist, wobei in Reihe mit jeder Halbbrücke ein Messwiderstand angeordnet ist, welche Messwiderstände eine Serienschaltung bilden, die intermittierend von einem Kreisstrom des Motors durchflossen wird, welcher in den Messwiderständen der Serienschaltung einen Spannungsabfall hervorruft, der zur Ermittlung desjenigen Stromes geeignet ist, der beim Fließen eines Kreisstroms durch den in der Brückendiagonalen angeordneten Wicklungsstrang fließt.

Bevorzugt sind zum Filtern des Spannungsabfalls dem zugeordneten Messwiderstand Filterelemente zugeordnet.

Bevorzugt ist die A/D-Wandlung so gesteuert, dass sie außerhalb der Schaltflanken des PWM-Signals eingeleitet wird.

Bevorzugt ist die A/D-Wandlung so gesteuert, dass sie während des Fließens eines Kreisstroms eingeleitet wird.

Weitere Einzelheiten und vorteilhafte Weiterbildungen der Erfindung ergeben sich aus den im Folgenden beschriebenen und in der Zeichnung dargestellten, in keiner Weise als Einschränkung der Erfindung zu verstehenden Ausführungsbeispielen, sowie aus den Unteransprüchen. Es zeigt:

Fig. 1      ein Übersichts-Schaltbild zur Erläuterung der Grundzüge der Erfindung,

Fig. 2      Schaubilder, welche schematisch zeigen, wie Veränderungen der Betriebsspannung $U_B$ durch eine entsprechende Veränderung eines Tastverhältnisses pwm kompensiert werden,

Fig. 2A      zeigt den Fall, dass $U_B$ konstant ist und seinen Nennwert hat, z.B. 80 V; in diesem Fall ergibt sich das Tastverhältnis pwmA mit einer Impulsdauer $t_1$ und einer Pausendauer $t_2$,

Fig. 2B      zeigt den Fall, dass $U_B$ abnimmt und z.B. nur noch 75 V beträgt. In diesem Fall wird $t_1$ länger, und das Tastverhältnis pwmB nimmt folglich zu,

Fig. 2C      zeigt den Fall, dass $U_B$ zunimmt und z.B. 100 V beträgt. In diesem Fall nimmt $t_1$ ab, ebenso das Tastverhältnis pwmC,

Fig. 3      den Verlauf des Stroms im Strang 26 bei einem mittleren Tastverhältnis pwm und bei einem größeren Tastverhältnis,

Fig. 4      ein detaillierteres Schaltbild analog Fig. 1,

Fig. 5      eine Darstellung der Anordnung 80 in den Fig. 1 und 4,

Fig. 6      eine Darstellung des Stromverlaufs im Wicklungsstrang 26 der Fig. 1 und 4 bei Betrieb mit konstanter Drehzahl; gezeigt werden auch die Schwankungen des Stromes im Wicklungsstrang 26, die durch das PWM-Signal pwm3 (oder pwm4) verursacht werden,

Fig. 7      den Stromverlauf im Wicklungsstrang 26 beim Start des Motors 20,

Fig. 8      den Stromverlauf im Wicklungsstrang 26 in dem Fall, dass der Motor 20 nicht startet, z.B., weil die Startstellung des Rotors 28 nicht optimal ist,

Fig. 9      den Stromverlauf im Strang 26 analog Fig. 8, wobei nach Ablauf einer vorgegebenen Zeitspanne $T_{128}$ automatisch kommutiert wird, um einen Anlaufversuch mit der umgekehrten Stromrichtung zu unternehmen, der bei diesem Beispiel erfolgreich ist,

Fig. 10    ein Flussdiagramm zur Erläuterung der Initialisierung des Motors 20 nach dem Einschalten und zur Erläuterung der Strommessung,,

Fig. 11    ein Flussdiagramm für die Ermittlung und Verifizierung des Strom-Maximums,

Fig. 12    ein Flussdiagramm, welches die Ermittlung und Verifizierung des Strom-Minimums zeigt,

Fig. 13    ein Flussdiagramm, welches ein Beispiel für die Ermittlung und Verifizierung des Kommutierungszeitpunkts zeigt,

Fig. 14    eine Variante zu Fig. 10, welche besonders für Betrieb an einer Versorgungsspannung $U_B$ mit starken Spannungsschwankungen ausgelegt ist, z.B. an einer welligen Gleichspannung, die durch Gleichrichtung einer Wechselspannung erzeugt wurde,

Fig. 15    eine Variante zu der Schaltung nach den Fig. 1 bis 5; während bei Fig. 1 bis 5 die oberen Transistoren T1 und T2 zur Kommutierung des Stromes in der Wicklung 26 dienen und die unteren Transistoren T3 und T4 mittels der PWM-Signale pwm3 bzw. pwm4 im Betrieb getaktet, also rasch mit einem vorgegebenen Tastverhältnis ein- und ausgeschaltet werden, ist es bei der Variante nach den Fig. 15 bis 19 umgekehrt; Fig. 15 zeigt die Zufuhr von Energie aus der Spannungsquelle $U_B$ über die Feldeffekttransistoren S1 und S4,

Fig. 16    die Unterbrechung der Energiezufuhr aus der Stromquelle $U_B$, und das Fließen eines Kreisstroms i* im unteren Teil der H-Brücke 22; der Kreisstrom i* fließt bei Fig. 16 im Uhrzeigersinn,

Fig. 17    die Zufuhr von Energie aus der Stromquelle $U_B$ über die Feldeffekttransistoren S2 und S3, also, bezogen auf den vorausgehenden Zustand der Fig. 15, nach einer Kommutierung,

Fig. 18    die Unterbrechung der Energiezufuhr aus der Stromquelle $U_B$ durch Takten des FET S2, wodurch im unteren Teil der H-Brücke 22 ein Kreisstrom entgegen dem Uhrzeigersinn fließt, und

Fig. 19    eine schematische Darstellung zur Erläuterung der Variante nach den Fig. 15 bis 18.

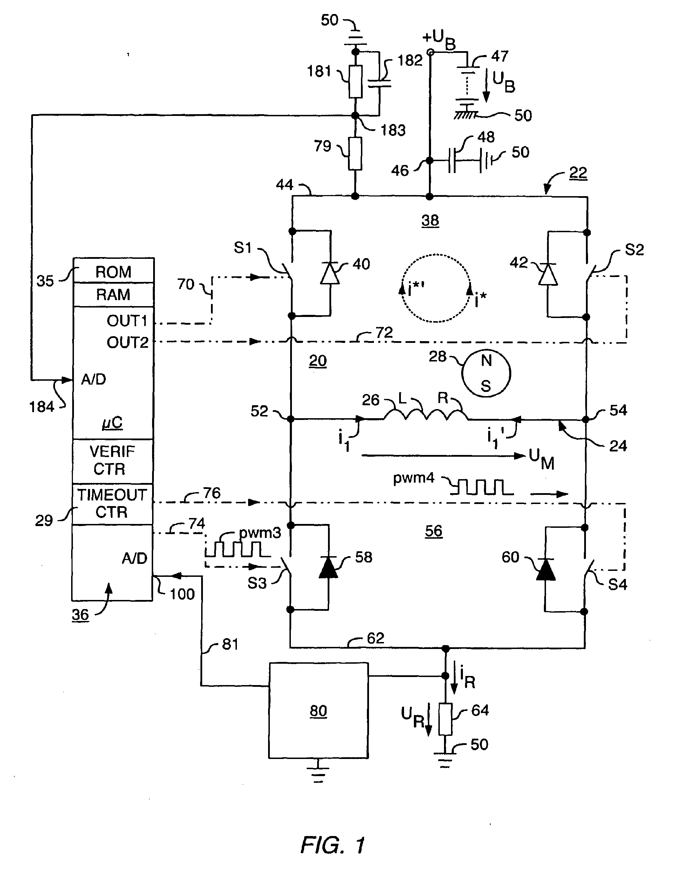

Fig. 1 zeigt in stark schematisierter Darstellung den grundsätzlichen Aufbau eines zweipulsigen, einsträngigen elektronisch kommutierten Motors 20, dessen einziger Wicklungsstrang 26 an einer H-Brücke 22 betrieben wird.

### Terminologie

**"Einsträngig"** bedeutet, dass der Motor 20 bei diesem Beispiel von einem einzigen Wicklungsstrang 26 angetrieben wird. Die Erfindung eignet sich in gleicher Weise für mehrsträngige Motoren.
**"Zweipulsig"** bedeutet, dass während einer Drehung des Rotors 28 um 360° el. durch den Strang 26 zwei Stromimpulse fließen, nämlich z.B. ein Impuls $i_1$ von links nach rechts, und anschließend ein Impuls $i_1$' von rechts nach links. Zwischen zwei Impulsen liegt jeweils ein Umschaltvorgang, den man als **Kommutierung** bezeichnet. Die Erfindung eignet sich in gleicher Weise für mehrsträngige Motoren.

### "TIMEOUT"

Dieser Begriff bezeichnet die Überschreitung einer vorgegebenen Zeitspanne, und diese Überschreitung führt dann zu situationsbedingten Konsequenzen, wie nachfolgend beschrieben. Hierfür ist ein TIMEOUT-Zähler 29 (TIMEOUT-CTR) vorgesehen, der, nach seinem Start, nach Ablauf einer vorgegebenen Zeitspanne, z.B. jeweils nach 0,05 Sekunden einen Schritt weiterzahlt. Nach einer vorgegebenen Zahl von Schritten, z.B. nach 0,2 Sekunden, kommt es zu einem TIMEOUT, also einem Zeitablauf, wobei ein Signal ausgelöst wird. Deshalb muss der TIMEOUT-Zähler29 im Betrieb ständig zurückgestellt werden, damit er kein Signal auslöst. Dieser Zähler wird beim ersten Einschalten des Motors zurückgestellt, ebenso nach jeder erfolgreichen Kommutierung.
Hat nach einer vorgegebenen Zeitspanne, z.B. nach 0,2 Sekunden, keine Kommutierung stattgefunden, so bewirkt das ein TIMEOUT-Signal. Folgt dieses Signal auf das Einschalten des Motors, so bewirkt es z.B. bei einem einsträngigen Motor eine Umschaltung der Richtung des Stromes $i_1$ im Strang 26, und bei einem zweisträngigen Motor eine Umschaltung auf die Bestromung des anderen Stranges.

Um korrekt kommutieren zu können, muss man die augenblickliche Drehstellung des Rotors 28 kennen. Bei konventionellen Motoren verwendet man zu diesem Zweck meistens einen Rotorstellungssensor, z.B. einen Hallsensor oder einen optischen Sensor. Jedoch muss ein solcher Sensor im Motor selbst angeordnet werden, gewöhnlich im magnetisch wirksamen Luftspalt, und dies ist besonders bei hohen Betriebsspannungen schwierig. Die vorliegende Erfindung verwendet deshalb eine andere Art, die Rotorstellung zu erfassen, wie sie nachfolgend beschrieben wird. Diese Art der Erfassung der Rotorstellung ermöglicht eine räumliche Trennung von Motor und zugehöriger Elektronik.

In einem Querzweig 24, den man auch als Diagonale der H-Brücke 22 bezeichnet, hat der Motor 20 in seinem Stator den Wicklungsstrang 26 mit der Induktivität L und dem ohmschen Widerstand R. Der Strang 26 arbeitet zusammen mit dem nur schematisch angedeuteten permanentmagnetischen Rotor 28, der je nach Bauart die verschiedensten Formen haben kann, z.B. Innenrotor, Außenrotor, Flachrotor etc., und der verschiedene Polzahlen haben kann. z.B. zweipolig (wie dargestellt), vier-, sechs-, achtpolig etc. Die Magnetisierung des Rotors 28 ist bevorzugt trapezförmig mit schmalen Lücken zwischen den Polen. Andere Magnetisierungen sind ebenfalls möglich. (Die "Lücken" beziehen sich auf die Form der Magnetisierung und die in dieser vorgesehenen "Pollücken", einen Begriff des Elektromaschinenbaus.)

Die H-Brücke 22 hat eine obere Brückenhälfte 38, bei der links ein Halbleiterschalter S1 und rechts ein Halbleiterschalter S2 vorgesehen ist. Zu S1 ist eine Freilaufdiode 40 und zu S2 eine Freilaufdiode 42 antiparallel geschaltet, deren Katoden über eine Verbindungsleitung 44 und einen ersten Anschluss 46 an den positiven Pol einer Spannungsquelle 47 mit der Spannung $U_B$ angeschlossen werden können, z.B. an die Batterie eines Elektrofahrzeugs mit einer Nennspannung von $U_B$ = 80 V. Zwischen dem Anschluss 46 und Masse 50, die als zweiter Anschluss dient, liegt ein Kondensator 48, den man als Zwischenkreis-Kondensator 48 (dc link capacitor) bezeichnen kann und der dazu dient, einen sogenannten Rippelstrom (ripple current) des Motors 20 aufzunehmen.

Die Anode der Diode 40 ist mit einem Knotenpunkt 52 verbunden, diejenige der Diode 42 mit einem Knotenpunkt 54. Der Wicklungsstrang 26 ist zwischen den Knotenpunkten 52 und 54 angeordnet. Die obere Brückenhälfte 38 dient hier zur Kommutierung, d.h. entweder ist der Schalter S1 leitend und S2 ist nichtleitend, so dass ein Strom $i_1$ fließt, oder umgekehrt ist S2 leitend und S1 nichtleitend, so dass ein Strom $i_1'$ fließt.

Die H-Brücke 22 hat auch eine untere Brückenhälfte 56, bei der links ein Halbleiterschalter S3 und rechts ein Halbleiterschalter S4 vorgesehen sind. Zu S3 ist eine Freilaufdiode 58 und zu S4 eine Freilaufdiode 60 antiparallel geschaltet. Die Katode der Diode 58 ist mit dem Knotenpunkt 52 verbunden, diejenige der Diode 60 mit dem Knotenpunkt 54. Die Anoden der Dioden 58, 60 sind mit einer Verbindungsleitung 62 verbunden, die über einen Messwiderstand (Erfassungsanordnung) 64 mit Masse verbunden ist. Durch den Widerstand 64 fließt im Betrieb ein Strom $i_R$, so dass dort ein Spannungsabfall $u_R$ entsteht.

Die Halbleiterschalter S1 bis S4 werden über Steuerverbindungen 70, 72, 74, 76 von einem $\mu$C 36 (oder einem sonstigen programmierbaren bzw. programmgesteuerten Rechner, z.B. einem programmierbaren ASIC) gesteuert. Hierzu braucht der $\mu$C 36 Informationen über die augenblickliche Rotorstellung, die er über eine Signalleitung 81 und interne Rechenoperationen erhält. Dies wird nachfolgend beschrieben.

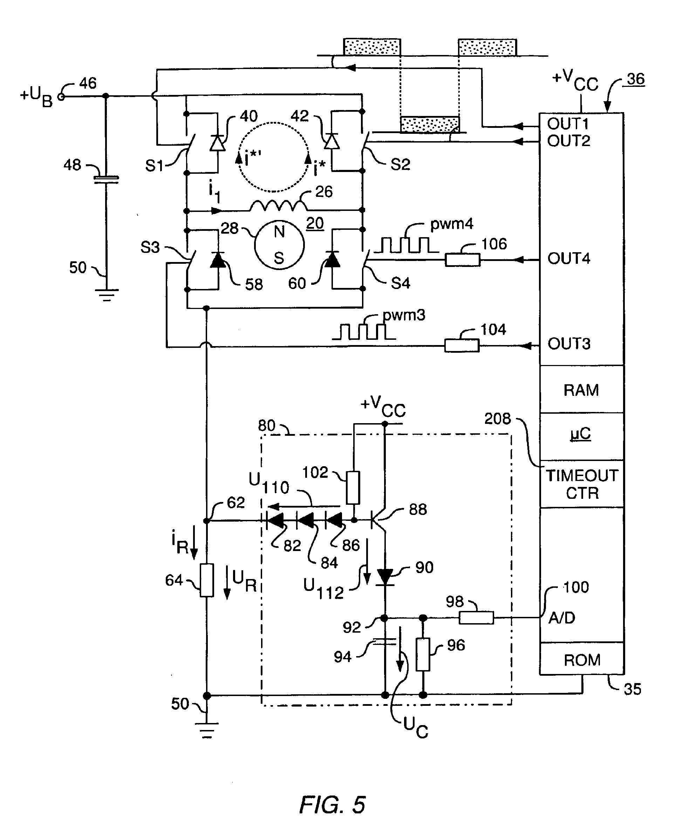

Die Signalleitung 81 kommt von einer Auswerteschaltung (Erfassungsanordnung) 80, die nachfolgend bei **Fig. 5** näher beschrieben wird und die bei diesem Ausführungsbeispiel an die Verbindungsleitung 62 angeschlossen ist, so dass ihr der Spannungsabfall $u_R$ am Messwiderstand 64 zugeführt wird. Durch den Widerstand 64 fließt der Motorstrom $i_R$, und da dieser abhängig ist von der Drehstellung des Rotors 28, können ihm Informationen über die augenblickliche Drehstellung des Rotors 28 entlockt werden, wie das nachfolgend beschrieben wird.

Als Erfassungsanordnung kann auch die Kombination aus Messwiderstand 64 und Auswerteschaltung 80 angesehen werden, und diese ist dazu ausgebildet, einen aus der Gleichspannungsquelle 47 dem Motor 20 zugeführten Strom in zeitlichen Abständen zu erfassen und zu digitalisieren.

Wenn die Spannung $U_B$ der Spannungsquelle 47 zunimmt, nimmt auch der Strom $i_R$ zu, und wenn $U_B$ abnimmt, nimmt auch $i_R$ ab. Solche äußeren Einflüsse sind unerwünscht, und deshalb wird $U_B$ einem Spannungsteiler zugeführt, dessen Widerstand 79 zwischen dem ersten Anschluss 46 und einem Knotenpunkt 183 liegt, und dessen Widerstand 181 zwischen dem Knotenpunkt 183 und Masse 50 liegt. Parallel zum Widerstand 181 liegt ein Glättungskondensator 182, z.B. mit einem Wert zwischen 5 und 100 nF, je nach Größe des Motors

Der Knotenpunkt 183 wird an einen A/D-Anschluss 184 des $\mu$C 36 angeschlossen, und dadurch erhält der $\mu$C 36 eine Information über die augenblickliche Höhe der Spannung $U_B$.

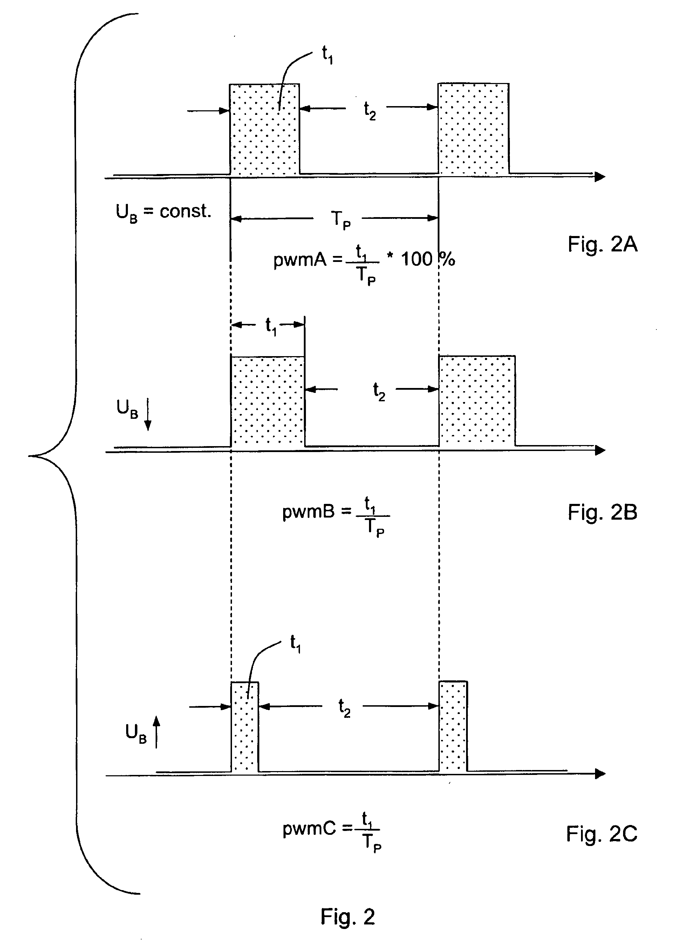

Diese Spannung wird ausgewertet, wie in Fig. 2 dargestellt.

**Fig. 2A** zeigt den Fall, dass $U_B$ konstant ist und seinen Nennwert hat, z.B. 80 V. In diesem Fall ergibt sich das Tastverhältnis pwmA mit einer Impulsdauer $t_1$ und einer Pausendauer t2, wobei für die Periodendauer $T_p$ gilt

$$T_p = t_1 + t_2 \qquad\qquad \dots (1)$$

**Fig. 2B** zeigt den Fall, dass $U_B$ abnimmt und z.B. nur noch 75 V beträgt. In diesem Fall wird $t_1$ länger, und das

Tastverhältnis pwmB ist folglich größer als pwmA.

**Fig. 2C** zeigt den Fall, dass $U_B$ zunimmt und z.B. 100 V beträgt. In diesem Fall nimmt $t_1$ ab, ebenso das Tastverhältnis pwmC.

Da die Spannung $U_m$ (Fig. 1) am Motor 20 etwa beträgt

$$U_m = U_B * pwm \qquad\qquad ...(2),$$

können Änderungen der Spannung $U_B$ problemlos durch eine Änderung des Tastverhältnisses kompensiert werden, um die Spannung Um am Motor 20 konstant zu halten.

Wenn z.B. der Schalter S1 leitend und der Schalter S2 nichtleitend ist, bleibt der Schalter S3 ständig nichtleitend, und der Schalter S4 wird mit einem Tastverhältnis pwm entsprechend der augenblicklichen Spannung $U_B$ geöffnet und geschlossen, wie das in Fig. 1 schematisch dargestellt ist.

Wenn andererseits der Schalter S1 nichtleitend und der Schalter S2 leitend ist, bleibt der Schalter S4 nichtleitend, und der Schalter S3 wird mit einem Tastverhältnis pwm3 entsprechend der augenblicklichen Spannung $U_B$ nichtleitend oder leitend gesteuert. Je nach Anwendung kann die Anpassung des Tastverhältnisses pwm an die augenblickliche Betriebsspannung $U_B$ in größeren oder kleineren Abständen erfolgen, wie das nachfolgend beschrieben wird.

### Arbeitsweise

Im Betrieb werden - je nach der Drehstellung des Rotors 28 - z.B. als erstes die beiden Halbleiterschalter S1 und S4 leitend gesteuert, so dass ein Stromimpuls $i_1$ vom Anschluss 46 über S1, den Knotenpunkt 52, den Wicklungsstrang 26, den Knotenpunkt 54, den Halbleiterschalter S4 und den Messwiderstand 64 nach Masse 50 fließt. Da hierbei der Halbleiterschalter S4 durch das PWM-Signal pwm4 ständig ein- und ausgeschaltet wird, fließt in der oberen Brückenhälfte 56 jedes Mal ein Kreisstrom i*, wenn S4 durch ein PWM-Signal gesperrt wird. Dieser Kreisstrom i* fließt durch die Diode 42, den Halbleiterschalter S1 und den Wicklungsstrang 26 zurück zur Diode 42. Durch das Stromkreisen, also den Kreisstrom i*, wird erreicht, dass der Strom i* dann sehr rasch abnimmt, wenn S4 durch das PWM-Signal pwm4 zeitweilig gesperrt ist. Der Kreisstrom wirkt auf den Motor 20 als Antriebsstrom, d.h. der Rotor 28 wird durch ihn angetrieben, so dass der Kreisstrom den Wirkungsgrad des Motors 20 verbessert.

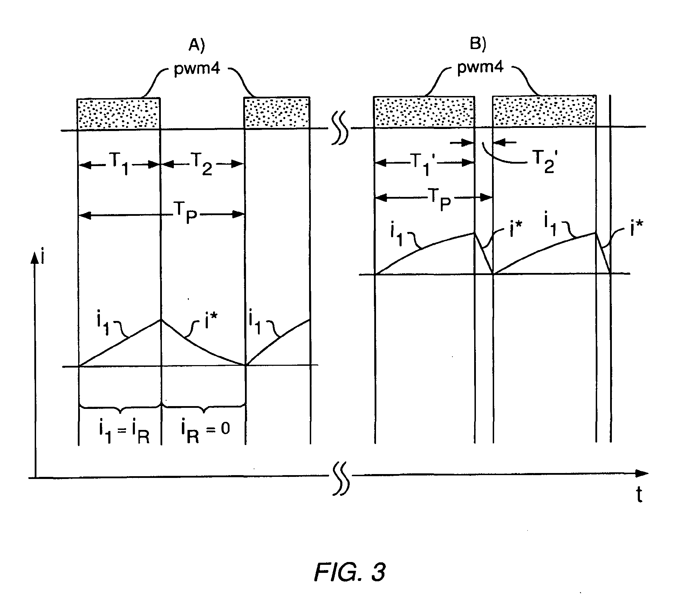

Wie man aus Fig. 1 und 3 erkennt, fließt der Kreisstrom i* (und ebenso der Kreisstrom i*' in der umgekehrten Richtung) nur in der oberen Brückenhälfte 38, nicht aber durch den Messwiderstand 64, so dass der Kreisstrom i* oder i*' bei der Schaltung nach Fig. 1 am Messwiderstand 64 nicht gemessen werden kann.

Aus diesem Grund wird hier die Schaltung 80 verwendet, die in Fig. 5 dargestellt ist und im Anschluss an Fig. 3 beschrieben wird.

Die vollständige Erfassung der Ströme durch den Wicklungsstrang 26 ist deshalb wichtig, weil die Berechnung des Zeitpunkts für die Kommutierung auf einer einigermaßen vollständigen Erfassung der Ströme $i_1$ und $i_1'$ im Wicklungsstrang 26 beruht, und die Kreisströme sind ein Bestandteil dieser Ströme durch den Wicklungsstrang 26. Hierbei wird die Form des Stroms $i_1$, $i_1'$ in der Statorwicklungsanordnung 26 im Betrieb durch die Drehung des permanentmagnetischen Rotors 28 beeinflusst.

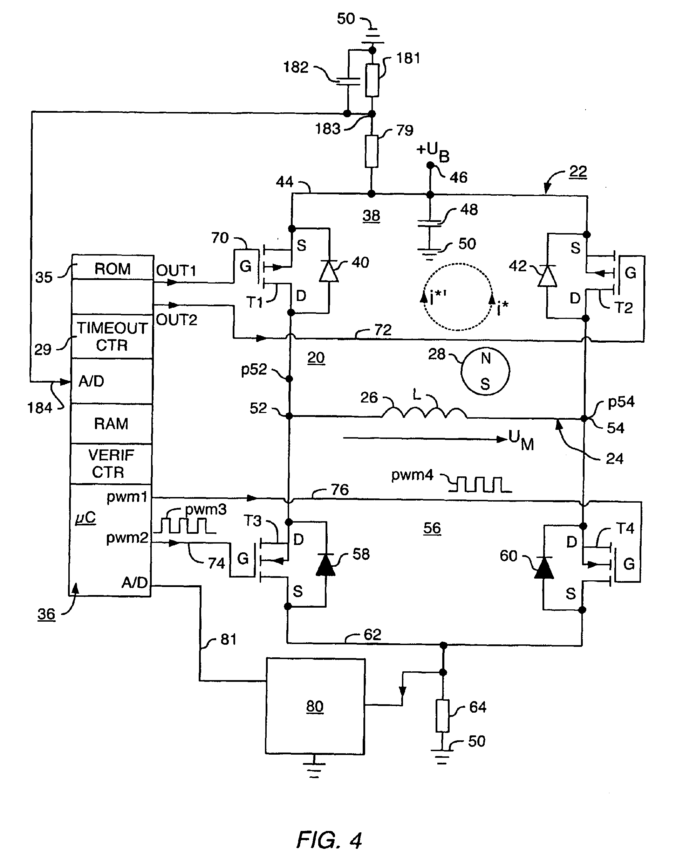

**Fig. 4** zeigt ein Beispiel für die Realisierung der H-Brücke 22 mit MOSFETs. Gleiche oder gleich wirkende Teile wie in Fig. 1 haben dieselben Bezugszeichen wie dort und werden gewöhnlich nicht nochmals beschrieben.

Statt des Halbleiterschalters S1 der Fig. 1 ist hier ein p-Kanal-MOSFET T1 vorgesehen, dessen Source S mit dem Anschluss 46 verbunden ist, und dessen Gate G über die Leitung 70 vom µC 36 gesteuert wird. Antiparallel zum MOSFET T1 liegt die Freilaufdiode 40. In vielen Fällen ist eine solche Freilaufdiode bereits im MOSFET vorhanden als sogenannte "parasitäre" Freilaufdiode. Falls nicht, kann sie als separates Bauelement implementiert werden.

Ebenso ist statt des Halbleiterschalters S2 der Fig. 1 ein p-Kanal-MOSFET T2 vorhanden, zu dem die Freilaufdiode 42 antiparallel geschaltet ist. Der Transistor T2 wird über die Leitung 72 vom µC 36 gesteuert.

Statt des Halbleiterschalters S3 der Fig. 1 ist in Fig. 2 ein n-Kanal-MOSFET T3 vorgesehen, zu dem die Freilaufdiode 58 antiparallel geschaltet ist. Seine Source S ist mit einer Verbindung 62 verbunden, und sein Drain D ist ebenso wie derjenige des Transistors T1 mit dem Knotenpunkt 52 verbunden. Er wird über eine Leitung 74 vom µC 36 mit den PWM-Signalen pwm3 gesteuert, deren Tastverhältnis eine Funktion von $U_B$ ist.

Ebenso ist statt des Halbleiterschalters S4 der Fig. 1 ein n-Kanal-MOSFET T4 vorgesehen, zu welchem die Freilaufdiode 60 antiparallel geschaltet ist. Sein Drain D ist, ebenso wie der Drain D des Halbleiterschalters T2, mit dem Knotenpunkt 54 verbunden. Der MOSFET T4 wird über die Steuerleitung 76 vom µC 36 mit den PWM-Impulsen pwm4 gesteuert, deren Tastverhältnis, wie bei Fig. 2A bis 2C beschrieben, eine Funktion der Betriebsspannung $U_B$ ist.

Zur Erläuterung der Wirkungsweise wird auf Fig. 1 Bezug genommen, wo die Wirkungsweise bereits ausführlich beschrieben wurde.

**Fig. 3** zeigt zwei Beispiele a) und b) für den Verlauf des Stromes $i_1$ im Wicklungsstrang 26 als Funktion des Tastverhältnisses pwm4, das im Betrieb dem Halbleiterschalter S4 zugeführt wird.

In **Fig. 3a)** beträgt der Wert von pwm4 etwa 50 %, d.h. die Impulsdauer T1 beträgt etwa 50 % der Periodendauer Tp. Dadurch beträgt die Spannung Um am Motor 20 etwa 50 % von $U_B$, vgl. die Gleichung (2).

In **Fig. 3b)** beträgt pwm4 etwa 80 %, d.h. die Impulsdauer T1' beträgt etwa 80 % von Tp, so dass die Spannung Um etwa 80 % von UB beträgt.

Wie bei Fig. 2 beschrieben, wird $U_B$ laufend erfasst, und je nach dem gemessenen Wert werden die Tastverhältnisse pwm3 und pwm4 gesenkt, angehoben oder konstant gehalten.

Wie man Fig. 1 und Fig. 3a) entnimmt, fließt (bei einer vorgegebenen Drehstellung des Rotors 28) der Strom $i_1$ von links nach rechts durch den Strang 26, wobei S1 ohne Unterbrechungen leitend ist und S4 durch das Signal pwm4 ständig aus- und eingeschaltet wird.

Wenn S4 eingeschaltet ist, fließt der Strom $i_1$ durch den Widerstand 64 und kann dort gemessen werden. In Fig. 3 ist das während der Zeitspannen $T_1$ bzw. $T_1'$ der Fall, in denen der Halbleiterschalter S4 leitend gesteuert wird.

Jedoch ist während der Zeitspannen $T_2$ bzw. $T_2'$ von Fig. 3 der Halbleiterschalter S4 nicht leitend, so dass ein (abnehmender) Kreisstrom i* durch den Strang 26, die Diode 42 und den Halbleiterschalter S1 fließt. Dabei ist der Messwiderstand 64 stromlos, so dass an ihm dieser Strom i* nicht gemessen werden kann. Dies bedeutet, dass die Strommessung intermittierend "blind" ist, wobei die Dauer der "Blindheit" von der Größe der Tastverhältnisse pwm3 bzw. pwm4 abhängt.

Die Schaltung 80 nach **Fig. 5** dient als "Sehhilfe" zur Beseitigung dieser Blindheit, um einen optimalen Lauf des Motors 20 zu ermöglichen. Sie hat folgende Funktionen:

a) Der Strom $i_R$ durch den Messwiderstand 64 wird erfasst, solange er fließt.

b) In den Lücken des Stromes $i_R$, während deren beide Halbleiterschalter S3 und S4 gesperrt sind, ist $i_R$ = 0. In diesen Lücken wird deshalb ein "Surrogatstrom" rekonstruiert, der hinsichtlich Form und Größe dem Kreisstrom i* möglichst gut angenähert ist.

c) Zudem sollte nach Möglichkeit das analoge Signal, welches dem A/D-Wandler 100 des µC 36 zugeführt wird, in einem günstigen Spannungsbereich für die Digitalisierung durch den µC 36 liegen. Das bedeutet, dass dieses analoge Signal besonders gut ausgewertet werden kann, wenn es um einen günstigen Offset verschoben wird.

Da nämlich nur der Verlauf des Motorstromes $i_1$ bzw. $i_1'$ wichtig ist, also dessen Form und nicht dessen absoluter Wert, muss bei der Digitalisierung durch den µC 36 nur die "digitale Form" des Stromes $i_1$ bzw. $i_1'$ durch den Wicklungsstrang 26 gemessen werden, also das digitale Bild des Stromverlaufs abhängig von der Zeit.

In **Fig. 5** ist an den oberen Anschluss 62 des Messwiderstands 64 die Katode einer Diode 82 angeschlossen, die hier mit zwei anderen Dioden 84, 86 in Reihe geschaltet ist. Die Anode der Diode 86 ist mit der Basis eines npn-Transistors 88 verbunden, dessen Kollektor mit einer geregelten Spannung +Vcc, z.B. + 5 V, verbunden ist, und dessen Emitter mit der Anode einer Diode 90 verbunden ist, deren Katode über einen Knotenpunkt 92 mit einem Kondensator 94 verbunden ist, dessen anderer Anschluss mit Masse 50 verbunden ist und zu dem ein Widerstand 96 parallel geschaltet ist. Außerdem ist der Knotenpunkt 92 über einen Widerstand 98 mit einem A/D-Eingang 100 des µC 36 verbunden. Ferner ist die Basis des Transistors 88 über einen Widerstand 102 mit dessen Kollektor verbunden.

**Ein Beispiel für die Bauteile der Schaltung 80**

| | |
|---|---|
| Widerstand 64 | ... 0,5 Ohm |
| Transistor 88 | .... BC846B |
| Widerstand 96 | ... 50 kOhm |
| Widerstand 98 | ... 2,2 kOhm |
| Widerstand 102 | ... 10 kOhm |
| Kondensator 48 | ... 22 µF |
| Kondensator 94 | ... 47 nF |
| µC 36 | ...PIC18F1330 |
| FETs T1 bis T4 | .... IRF7343 (Baustein mit zwei FETs) |
| Dioden 82, 84, 86, 90 | ....BAS516 |

Die FETs T1 bis T4 werden vom µC 36 über (nicht dargestellte) npn-Treibertransistoren gesteuert, z.B. BC478S.

Jede der Dioden 82, 84, 86, 90 erzeugt eine Diodenspannung von etwa 0,5 V, und ebenso erzeugt die Basis-Emitter-Strecke des (leitenden) npn-Transistors 88 eine Basis-Emitter-Spannung von etwa 0,5 V. Deshalb erzeugen die drei Dioden 82, 84, 86 eine konstante Spannung $U_{110}$ von 3 * 0,5 V = 1,5 V. Die Serienschaltung der Basis-Emitter-Spannung des leitenden Transistors 88 und der Diodenspannung der Diode 90 erzeugt eine Spannung $U_{112} = 2 * 0,5$ V = 1 V.

Die Funktion der Diode 90 ist es, einen Rückwärtsstrom durch den npn-Transistor 88 zu verhindern. Bei manchen npn-Transistoren ist ein solcher Strom möglich. Sollte die Diode 90 nicht erforderlich sein, entfällt auch eine der drei Dioden 82, 84 oder 86.

Wenn kein Strom $i_R$ fließt, hat der Punkt 62 das Potential 0 V, also das gleiche Potential wie Masse 50, und die Basis des Transistors 88 hat folglich das Potential $U_{110}$, also + 1,5 V. Der Kondensator 94 wird dann auf eine Spannung von 0,5 V geladen, denn wenn die Spannung $u_C$ am Kondensator 94 0,5 V beträgt und die Diodenspannung der Diode 90 ebenfalls 0,5 V beträgt, sperrt der Transistor 88, so dass der Kondensator 94 nicht weiter geladen wird und folglich seine Ladespannung auf den Mindestwert von 0,5 V geregelt wird.

Beträgt (als Beispiel) der Strom $i_R$ 0,4 A und R64 ist 0,5 Ohm, so hat $u_R$ den Wert 0,2 V, und das Potential an der Basis des Transistors 88 beträgt

$$u_R + U_{110} = 0,2 + 1,5 = 1,7 \text{ V,}$$

ist also um 0,2 V gestiegen, und die Spannung $u_C$ am Kondensator 94 steigt folglich ebenfalls um 0,2 V, hier auf 0,7 V.

Fließt im Widerstand 64 ein Strom von 1,4 A, so wird $u_R$ = 0,7 V, und folglich liegt an der Basis des Transistors 88 eine Spannung von

$$0,7 + (3 * 0,5) = 2,2 \text{ V.}$$

Diesem Anstieg folgt die Spannung $u_C$ am Kondensator 94 und nimmt einen um 0,7 V höheren Wert an, nämlich $u_C$ = 1,2 V.

Die Spannung $u_C$ wird über den Schutzwiderstand 98 dem Eingang 100 des µC 36 zugeführt und dort digitalisiert. Sie ist also bei dieser Schaltung um eine Offsetspannung von 0,5 V ins Positive verschoben, was die Messgenauigkeit erhöht. Die Offsetspannung von 0,5 V kann ggf. bei der folgenden Verarbeitung der digitalen Werte subtrahiert werden, doch stört sie im Normalfall nicht, so dass man direkt mit den gemessenen Werten arbeiten kann.

Die digitalisierten Werte des Signals am Eingang 100 werden anschließend verarbeitet, um Extremwerte der Messkurven zu ermitteln und eine Kommutierung bei einer gewünschten Höhe des Motorstroms $i_1$ oder $i_1$' zu bewirken

Solange also ein Strom $i_R$ fließt, der einen Spannungsabfall $u_R$ am Widerstand 64 erzeugt, wird die Ladespannung $u_C$ des Kondensators 94 durch den Wert von $u_R$ gesteuert.

Fließt aber kein Strom $i_R$, so wird der Transistor 88 gesperrt, so dass die Spannung $u_C$ durch die Entladung über den Widerstand 96 entsprechend einer e-Funktion auf den Wert 0,5 V fällt, und zwar mit einer Zeitkonstante von

$$\tau_C = R_{96} * C_{94} \qquad \qquad \dots (3)$$

Diese Zeitkonstante wird durch Auswahl der Werte des Kondensators 94 und des Widerstands 96 angeglichen an die Zeitkonstante $\tau_W$
des Wicklungsstranges 26. Diese beträgt

$$\tau_W = L_{26}/R_{26} \qquad \qquad \dots (4)$$

Legt man den Motor so aus, dass gilt

$$\tau_C \approx \tau_W \qquad \qquad \dots (5),$$

d.h. dass diese Zeitkonstanten ungefähr gleich sind, so stimmt für $i_R$ = 0, also den Zeitraum, während dessen im Strang 26 ein Kreisstrom fließt, der Verlauf, also die Form, des Surrogatstromes, der am Eingang 100 des µC 36 gemessen wird, recht gut mit dem Verlauf des Kreisstroms i* oder i*' überein, so dass der Verlauf des Kreisstromes gut durch dieses Surrogat angenähert wird.

Die Schaltung nach Fig. 5 hat den Vorteil, sehr preiswert zu sein. Zudem benötigt sie keine besonderen Informationen darüber, wann der Kreisstrom i* (oder i*') ein- oder ausgeschaltet wird, da diese Information dem Wert des Stromes $i_R$ am Messwiderstand 64 entnommen wird.

Dort, wo die Information über das Fließen des Kreisstromes direkt im Mikrocontroller verfügbar ist, kann die Schaltung weiter vereinfacht werden.

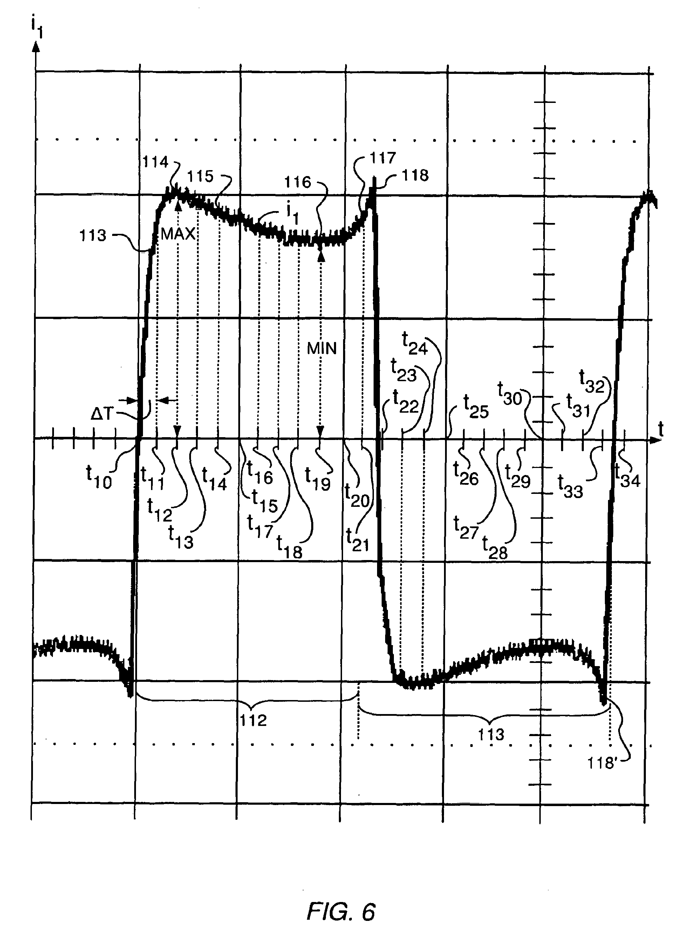

**Fig. 6** zeigt einen typischen Verlauf des Motorstromes $i_1$ (bzw. $i_1'$) durch den Wicklungsstrang 26 bei konstanter Betriebsspannung des Motors 20 und bei konstanter Drehzahl. In diesem Fall hat der Motorstrom eine charakteristische Form, die durch die jeweilige Bauart des Motors 20 bestimmt ist.

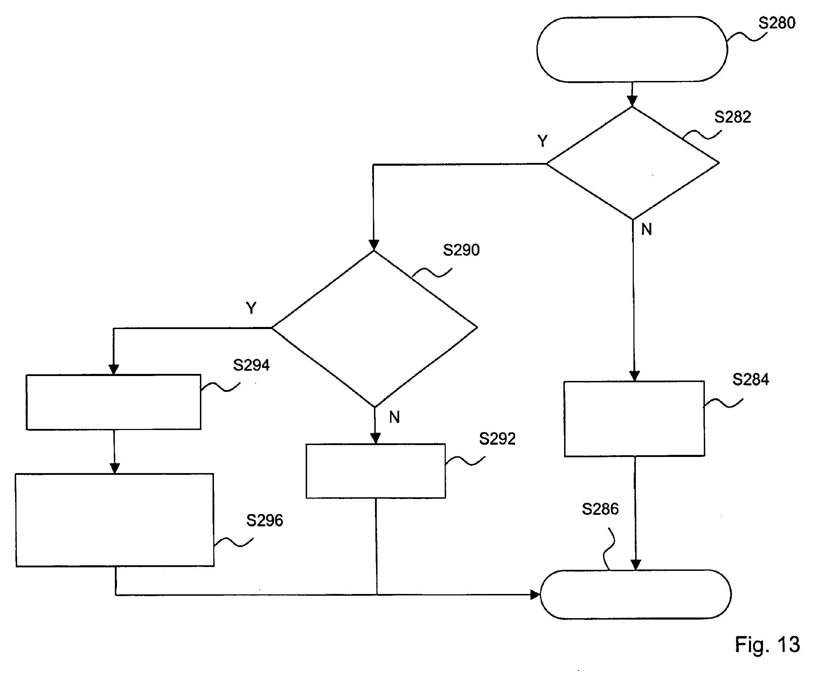

Wird dieser Strom $i_1$, $i_1'$ oder im vorliegenden Fall sein elektrischer Ersatzwert, nämlich die Spannung $u_C$ am Kondensator 94 der Fig. 5, fortlaufend in kleinen zeitlichen Abständen $\Delta T$ abgetastet, so erhält man ein elektrisches Bild des Motors, und mittels dieses elektrischen Bildes kann man die Extremwerte des Motorstromes $i_1$ bestimmen, also Maxima und Minima, und diese Werte ergeben dann eine Information über die augenblickliche Drehstellung des Rotors 28. Hieraus kann man sensorlos die Kommutierung bewirken und den Motor 20 elektronisch kommutieren, wie in Fig. 13 dargestellt. Auch kann man so in einfacher Weise feststellen, ob der Motor rotiert oder stillsteht. Das wird nachfolgend erläutert.

Da der Wert $\Delta T$ klein ist, z.B. 50 $\mu$s, ist es nicht möglich, die Verhältnisse maßstabsgerecht darzustellen, sondern Fig. 6 ist nur eine Prinzipdarstellung, bei welcher der Wert $\Delta T$ größer ist als in der Realität. In der Praxis ist die Zeitspanne $\Delta T$ nicht konstant, sondern schwankt etwas, was jedoch nicht stört.

In Fig. 6 erkennt man, dass der Strom $i_1$ durch das kontinuierliche Ein- und Ausschalten mit den Tastverhältnissen pwm3 oder pwm4 eine zackige Form hat, weil er z.B. pro Sekunde 16.000 mal ein- und ausgeschaltet wird, so dass pro Sekunde auch 16.000 Mal kurzzeitig ein Kreisstrom $i^*$ oder $i^{*'}$ fließt, dessen zeitliche Dauer z.B. 30 $\mu$s beträgt, der also sehr kurz ist.

Der Strom $i_1$ hat - je nach der Drehstellung des Rotors 28 - einen positiven Teil 112 und einen negativen Teil 113. Die Beschreibung des negativen Teils 113 erfolgt in der Sprache des Elektrotechnikers, d.h. wenn der Strom stärker negativ wird, sagt der Elektriker, dass dieser Strom zunimmt, und dass er "bis zu einem Maximum zunimmt", obwohl das rein mathematisch ein Minimum wäre. Hierauf werden Sprachpuristen hingewiesen.

Da der Strom $i_1$ vor seiner Messung durch die Brückenschaltung gleichgerichtet wird, spielt dieser Umstand für die Praxis ohnedies keine Rolle.

Fig. 6 zeigt den Verlauf des Stromes $i_1$ bei konstanter Drehzahl. Er hat eine charakteristische Form. Ausgehend vom Wert Null zum Zeitpunkt $t_{10}$ steigt der Strom $i_1$ bis etwa zum Zeitpunkt $t_{11}$ rasch an, erreicht etwa zum Zeitpunkt $t_{12}$ ein erstes Maximum 114, das auch als "Strombauch" oder "Stromrücken" bezeichnet wird, nimmt dann zu den Zeitpunkten $t_{13}$, $t_{14}$, $t_{15}$, $t_{16}$, $t_{17}$, $t_{18}$ langsam ab, und erreicht zum Zeitpunkt $t_{19}$ ein Minimum 116. Danach steigt der Strom $i_1$ zu den Zeitpunkten $t_{20}$ und $t_{21}$ wieder an und wird an einer Stelle 118 kommutiert, so dass er vor dem Zeitpunkt $t_{22}$ durch Null geht. Bis zum Zeitpunkt $t_{23}$ steigt er stark an und erreicht zwischen $t_{23}$ und $t_{24}$ sein (negatives) Maximum. Danach nimmt der (negative) Strom $i_1$ wieder ab und erreicht etwa zum Zeitpunkt $t_{30}$ sein (negatives) Minimum.

Danach nimmt er wieder zu und wird etwa zum Zeitpunkt $t_{33}$ kommutiert, worauf sich der Ablauf wiederholt, da der Strom $i_1$ mathematisch gesehen eine Sinusfunktion mit extrem vielen Oberwellen ist.

Ein elektronisch kommutierter Motor bekannter Bauart mit Reluktanz-Hilfsmoment hat pro Rotordrehung von 360° el. zwei stabile und zwei labile Ruhestellungen. Die Lage dieser Ruhestellungen ist vorgegeben durch die Bauweise des Motors.

Wenn man den Motor 20 abschaltet, weiß man naturgemäß nicht, in welcher dieser Stellungen er zur Ruhe kommt, und bei einem Motor ohne Rotorstellungssensor hat man auch keine Informationen über die Rotorstellung beim Start.

Deshalb geht man bevorzugt so vor, dass man beim Start, also bei still stehenden Rotor 28, stets die H-Brücke 22 in einer vorgegebenen Weise einschaltet. Hierbei fließt ein Strom $i_1$ durch den Wicklungsstrang 26, z.B. von links nach rechts, und wenn dies der richtige Strom für die augenblickliche Stellung des Rotors 28 ist, beginnt dieser, sich in der richtigen Richtung zu drehen. Der Wicklungsstrom steigt zunächst steil und bis zu einem Strommaximum 114 an, wie das Fig. 6 bei 113 zeigt, und er beginnt dann bei 115, leicht abzufallen.

Am Ende einer Halbwelle von $i_1$, die sich z.B. in Fig. 6 von $t_{10}$ bis $t_{22}$ erstreckt, steigt der Strom bei 117 wieder an, zunächst flach, und dann immer steiler. Man bezeichnet dies als die Bildung des "Stromschwanzes" 117. Dabei überwacht man z.B., ob der Stromschwanz bei 118 größer wird als das gemessene Strom-Maximum 114 der gleichen Kommutierungsphase, und wenn dies der Fall ist, wird kommutiert. Das ist dann die einfachste Form von Sensorlos-Betrieb nach der "Wicklungsstrom-Methode".

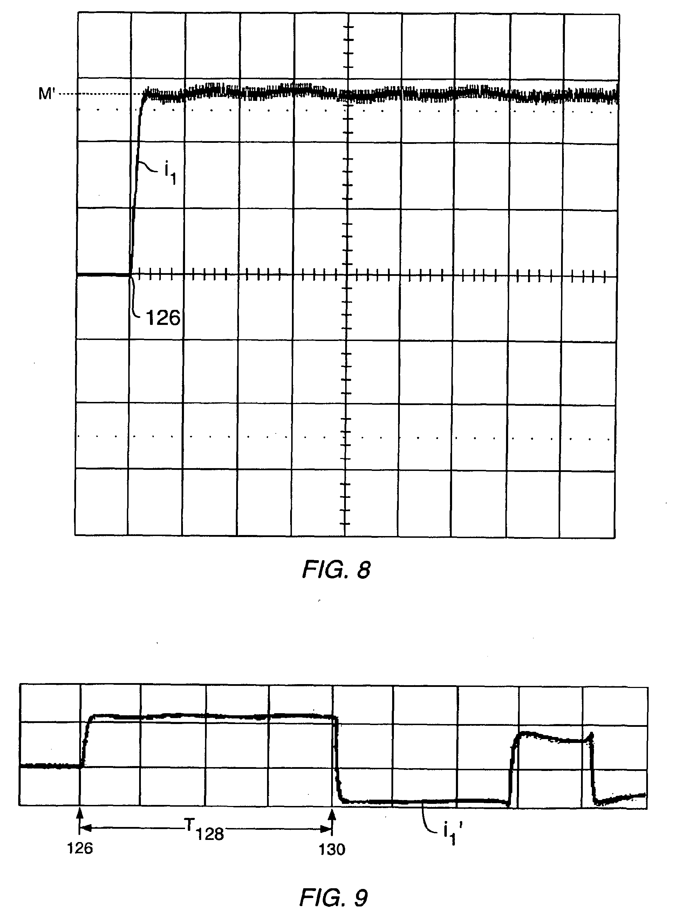

Wird beim Start der falsche Zweig der H-Brücke 22 bestromt, dann wird der Rotor 28 durch das Magnetfeld, welches der Strom $i_1$ im Wicklungsstrang 26 erzeugt, in eine bestimmte Drehstellung gedreht und bleibt dort unter leichten Oszillationen stehen, wie das die Fig. 8 und 9 zeigen.

Der Anlauf ist immer dann sofort erfolgreich, wenn der Rotor 28 beim Einschalten in der "richtigen" stabilen Rotorstellung steht. Sollte er in einer "falschen" Rotorstellung stehen, so wird das nach einem TIMEOUT erkannt, und die Stromrichtung im Wicklungsstrang 26 wird umgekehrt. Sollte der Anlauf dann immer noch nicht erfolgreich sein, so liegt eine Blockierung des Rotors 28 vor.

Nach dem Einschalten der H-Brücke 22 beginnt der Strom $i_1$ also zu steigen. Dieser Strom wird mit Hilfe des A/D-Wandlers 100 in eine Serie von digitalen Werten umgewandelt.

Zunächst wird der höchste Punkt des Stromrückens 113 gesucht. Dabei wird eine Serie von Messwerten erfasst, z.B. an den Stellen $t_{10}$, $t_{11}$, $t_{12}$, $t_{13}$ etc. Ist der gemessene Wert an der Stelle $t_{11}$ größer als der gemessene Stromwert an der Stelle $t_{10}$, so bildet der Wert an der Stelle $t_{11}$ das neue Maximum. Sobald der größte Wert 114 des Stromes $i_1$ an der Stelle $t_{12}$ im Bereich des Stromrückens 113 erreicht wurde, wird das gespeicherte Maximum nicht mehr überschrieben und bleibt somit gespeichert und kann für die Steuerung der Kommutierung verwendet werden.

Wird das Maximum nicht mehr überschritten, so wird die Zahl der Messungen ausgewertet, bei denen das für die Halbwelle gespeicherte Maximum nicht mehr erreicht wurde. Es muss eine bestimmte Zahl von aufeinander folgenden Messungen vorliegen, die das Maximum nicht mehr überschreiben, damit das zuvor ermittelte Maximum 114 akzeptiert wird.

Diese Zahl von Messungen ist bevorzugt drehzahlabhängig, d.h. sie ist bei niedrigen Drehzahlen höher als bei hohen Drehzahlen. Wird diese Zahl von Messungen überschritten, so beginnt die Suche nach dem Minimum. Die Suche beginnt damit, dass als vorläufiger Wert des Minimums das ermittelte Maximum 114 verwendet wird. Dann wird geprüft, ob der Strom $i_1$ (oder $i_1'$) deutlich unter dem Wert des Maximums 114 liegt.

Anschließend beginnt das Programm, das Minimum 116 der Stromkurve zu suchen. Allerdings müssen hierfür die gemessenen Werte zunächst deutlich unter dem Wert des Maximums 114 liegen, und erst dann kann die Ermittlung des Minimums 116 beginnen. Dies geschieht, um eine Blockierung des Rotors 28 sicher zu erkennen, da bei einer Blockierung die Werte des Motorstroms $i_1$ annähernd konstant bleiben, vgl. Fig. 8 und 9.

Bis die Auswertung des Minimums 116 beginnt, werden die erfassten Messwerte (z.B. bei $t_{13}$ bis $t_{18}$) verworfen, und das Programm wartet, bis der Strom $i_1$ genügend weit gefallen ist. Wird dabei eine bestimmte Zeit überschritten, ohne dass die Stromwerte deutlich fallen, so erfolgt ein Timeout. Entweder ist der Rotor 28 in diesem Fall blockiert, oder beim Anlauf wurde der falsche Zweig der H-Brücke 22 bestromt. Fallen die Werte an den Stellen $t_{13}$ bis $t_{18}$ deutlich ab, so ist das ein Zeichen, dass sich der Rotor 28 dreht, und das Programm beginnt die Ermittlung des Minimums 116. Ist der gemessene Wert an den Stellen $t_{18}$ und $t_{19}$ kleiner als der gemessene Wert an der vorhergehenden Stelle $t_{17}$, so wird der Wert bei $t_{18}$ als neues Minimum gespeichert. Wird dieses Minimum nicht mehr unterschritten, so bleibt es gespeichert. Bei Fig. 6 wird z.B. der Wert Min an der Stelle $t_{19}$ als Minimum gespeichert.

Danach wird der Kommutierungszeitpunkt 118 gesucht. Die Kommutierung erfolgt dann, wenn der Strom $i_1$ einen bestimmten Wert überschreitet. Z.B. könnte die Kommutierung sofort nach dem Erreichen des Minimums 116 stattfinden, oder aber erst, wenn der Stromschwanz 117 die Höhe des Maximums Max an der Stelle 114 überschritten hat. Wenn z.B. Max = 2 A ist, würde in diesem Fall erst kommutiert, wenn der Strom im Wicklungsstrang 26 nach dem Durchlaufen des Minimums 116 den Wert 2 A überschritten hat.

Auf diese Weise kann die sogenannte Frühzündung variabel eingestellt werden.

Um die Stromkurve durch Spannungsänderungen der Versorgungsspannung $U_B$ innerhalb einer Halbwelle des Motorstroms nicht zu verändern, sollte die Aktualisierung des PWM-Wertes für die Spannungsregelung immer zu Beginn einer neuen Halbwelle stattfinden, also z.B. in Fig. 6 an den Stellen $t_{10}$, $t_{22}$ und $t_{33}$.

Außerdem müssen Veränderungen der Stromkurvenform, die durch eine Änderung der Versorgungsspannung $U_B$ bewirkt werden, unverzüglich korrigiert werden. Das geschieht durch das beschriebene Anheben oder Absenken der PWM-Werte. Aus diesem Grund wird die Versorgungsspannung $U_B$ mit Hilfe des A/D-Wandlers 184 ständig überwacht, wie das in Fig. 1 bei den Elementen 79 bis 184 beschrieben wurde.

Beim Einschalten des Motors 20 wird also immer der gleiche Zweig der H-Brücke 22 bestromt. Steht der Rotor 28 dabei in einer Stellung, aus der er nicht starten kann, so bewirkt der Strom $i_1$ im Wicklungsstrang 26, dass sich der Rotor 28 in eine vorgegebene Drehstellung dreht, wobei der Strom $i_1$ im Wesentlichen gleich bleibt, vgl. Fig. 8 und 9. Deshalb wird hierbei nur ein Maximum erreicht, aber kein ausgeprägtes Minimum. Wenn nach einer definierten Zeit keine Kommutierung der H-Brücke 22 erfolgt, erhält man ein Timeout, und dadurch wird die H-Brücke 22 kommutiert. Findet auch jetzt noch keine Rotordrehung statt, so wird der Motor 20 ausgeschaltet.

Der Timeout wird also immer dann aktiv, wenn innerhalb einer vorgegebenen Zeitspanne keine Kommutierung stattgefunden hat. Wie oben beschrieben, wird beim ersten Bestromen des Wicklungsstranges 26 nach dem Timeout der bestromte Zweig der H-Brücke 22 gewechselt. Wenn ein Timeout bei laufendem Motor auftritt, geht der Motor in eine Blockierschutztaktung, d.h. der Statorstrom $i_1$ wird z.B. 5 Sekunden lang ausgeschaltet und dann z.B. 0,2 Sekunden lang wieder eingeschaltet, um zu sehen, ob der Motor 20 jetzt startet. Wenn sich dann der Rotor 28 normal dreht, also die Blockierung weggefallen ist, wird der Motor 20 wieder dauernd eingeschaltet und läuft normal. Fall dies nicht so ist, wird die Blockierschutztaktung fortgesetzt.

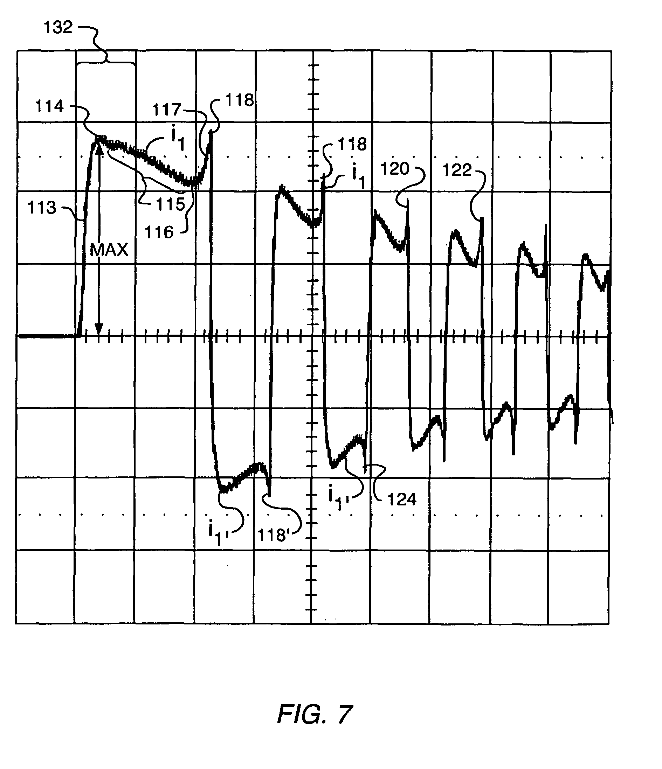

**Fig. 7** zeigt den Stromverlauf im Wicklungsstrang 26 beim Start des Motors 20. Diese Darstellung gilt für den Fall, dass sich der Rotor 28 beim Start in einer Startstellung befindet, aus der ein sicherer Anlauf in der richtigen Drehrichtung möglich ist.

Durch die Verwendung von Werten für die Tastverhältnisse pwm3 bzw. pwm4, welche an die augenblickliche Versorgungsspannung $U_B$ angepasst sind, um die Spannung Um am Motor 20 konstant zu halten, wird die H-Brücke 22 im gesamten Bereich der Versorgungsspannung $U_B$, z.B. von 20 V bis 160 V, immer mit einem gleich hohen Strom eingeschaltet, und der Rotor 28 fängt nach dem Einschalten an, sich in der richtigen Richtung zu drehen.

Wie Fig. 7 zeigt, steigt nach dem Einschalten der Strom bei 113 steil an und steigt bis zum Maximum 114 des "Stromrückens" 113 (auch "Strombauch" 113 genannt). Anschließend hieran hat der Strom $i_1$ einen abfallenden Bereich 115, und dieser fällt bis zum Minimum 116. Darauf folgt ein - gewöhnlich ansteigender - Bereich 117, der auch als "Stromschwanz" bezeichnet wird, und dieser Bereich 117 endet an der Stelle 118, an der eine Kommutierung stattfindet. Würde dort nicht kommutiert, so würde der Strom $i_1$ weit über die Stelle 118 der Fig. 7 hinaus ansteigen und wäre dann schwer abzuschalten, weil die im Wicklungsstrang 26 gespeicherte Energie E (in Watt) den Wert

$$E = 0,5 * L * i^2 \qquad \qquad \ldots(6)$$

hat, also mit dem Quadrat des Stromes i (in A) steigt. und deshalb sehr hoch würde. Hierbei ist L die Induktivität des Wicklungsstranges 26, gemessen In H.

Aus diesem Grund wird bei jeder Halbwelle anschließend an den Wert des Maximums 114 für diese Halbwelle (z.B. "Max" = 2,1 A), das Minimum 116 für diese Halbwelle ermittelt, z.B. 1,8 A, und daran anschließend wird der ansteigende Bereich 117 überwacht, bis dort der Strom $i_1$ z.B. den Wert "Max" erreicht hat, und das bewirkt dann die Kommutierung, d.h. wenn z.B. in Fig. 4 vor der Stelle 118 (Fig. 7) der Transistor T1 leitend und der Transistor T2 nicht leitend war, so wird nach der Stelle 118 der Transistor T1 nicht leitend, und der Transistor T2 wird leitend gesteuert. Dabei fließt in der oberen Brückenhälfte 38 ein Kreisstrom i* im Uhrzeigersinn, der von der Energie E (Gleichung 6) angetrieben wird, die auf diese Weise dem Rotor 28 als kinetische Energie zugeführt wird und diesen dadurch antreibt. Hierdurch sinkt der Kreisstrom i* schnell auf Null, und die Stromrichtung im Wicklungsstrang 26 kehrt sich dann um, d.h. der Wicklungsstrom $i_1'$ fließt dann von rechts nach links.

Die beschriebenen Vorgänge wiederholen sich dann ständig, wobei gemäß Fig. 7 die Stromimpulse zeitlich kürzer werden, da sich der Motor 20 zunehmend schneller dreht. Hierbei steigt die Gegen-EMK des Motors 20 an, so dass in Fig. 7 die Amplitude der Stromimpulse $i_1$ bzw. $i_1'$ mit steigender Drehzahl abnimmt, wobei aber ihre Form gleich bleibt, wie Fig. 7 zeigt, d.h. jeder Impuls hat einen Stromrücken 113, einen Stromsattel 115, und einen Stromschwanz 117. Man kann dies so erklären, dass bei konstanter Spannung $U_m$ der Strom etwa die Form des Statorblechpakets abbildet.

Bei der Stelle 118 für die Kommutierung ergeben sich kleine Schwankungen, da vor einer Kommutierung der analoge Wert des Stromes $i_1$ oder $i_1'$ digitalisiert werden muss, was Zeit erfordert, wodurch der Strom im Bereich 117 über den zuvor gemessenen Wert Max hinaus ansteigen kann, wie das in Fig. 7 an den Stellen 120, 122, 124 etc. dargestellt ist. Die Höhe dieser Schwankungen hängt davon ab, wie oft pro Sekunde digitalisiert wird, also von der Schnelligkeit des verwendeten µC 36, und natürlich von der Drehzahl des Motors 20, mit der dessen Rotor 28 rotiert.

Fig. 8 zeigt den Verlauf des Stromes $i_1$ nach dem Einschalten an einer Stelle 126, wenn der Rotor 28 sich nicht dreht.

In diesem Fall steigt der Strom $i_1$ auf einen Wert M' von z.B. 2,8 A, da sich der Wicklungsstrang 26 in diesem Fall wie eine konstante Induktivität verhält, also wie eine Drossel.

Dieser Fall kann auftreten

a) wenn sich der Rotor 28 zum Zeitpunkt 126 in einer ungünstigen Drehstellung befindet. In diesem Fall wird der Rotor 28 durch das Magnetfeld des Wicklungsstranges 26 in eine bestimmte Drehstellung verdreht und bleibt dort stehen;

b) wenn der Rotor 28 mechanisch blockiert wird, also an einer Drehung gehindert ist.

Wenn im Wicklungsstrang 26 ein solcher Stromverlauf festgestellt wird, bei dem der Strom praktisch konstant ist, wird zunächst durch das Programm im µC 36 nach einer Zeit T128 an einer Stelle 130 die Stromrichtung im Wicklungsstrang 26 umgedreht, wie das Fig. 9 zeigt, so dass der Strom $i_1'$ fließt, der dann den Motor zum Anlaufen bringt.

Falls der Motor 20 hierbei nicht startet, geht er - zum Verhindern einer Überhitzung - in eine sogenannte Blockierschutztaktung, d.h. der Motorstrom $i_1$ oder $i_1'$ wird während z.B. 5 Sekunden unterbrochen und dann während 0,2 Sekunden kurzzeitig wieder eingeschaltet. Wenn jetzt der Motor 20 startet, was durch die Messung der Werte für "Max" und "Min" festgestellt wird, geht der Motor 20 in eine normale Drehung über.

In beiden Fällen muss noch kontrolliert werden, ob sich der Motor 20 in der richtigen Drehrichtung dreht, und ggf. muss die Drehrichtung umgekehrt werden, was bekannt ist und deshalb hier nicht beschrieben wird.

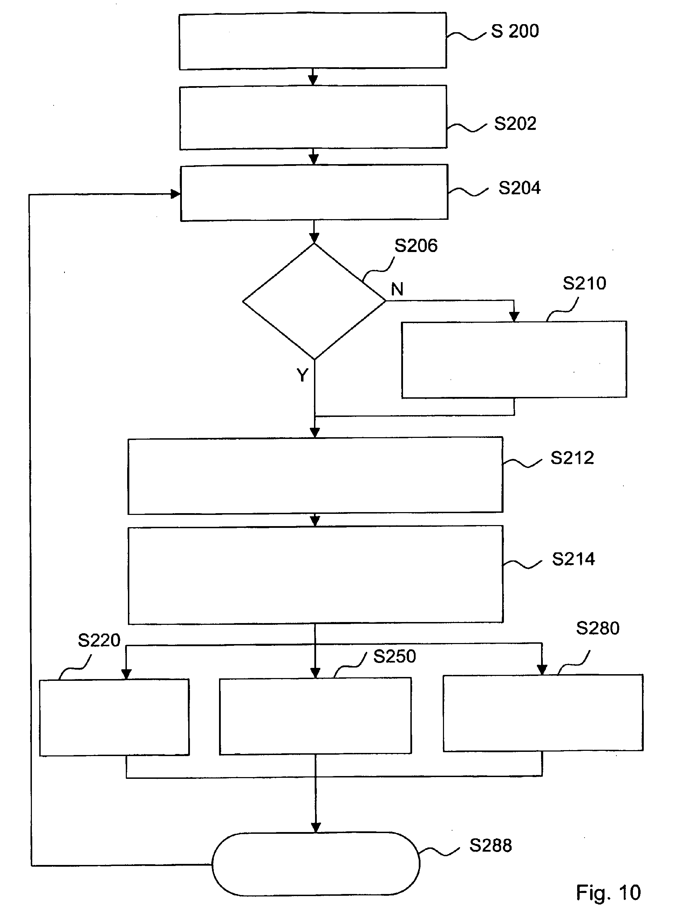

Der Inhalt der Schritte der Flussdiagramme gemäß Fig. 10 bis Fig. 14 ist am Ende der Beschreibung als Legende angehängt.

**Fig. 10** zeigt die Initialisierung nach dem Einschalten des Motors 20 für den Betrieb mit konstanter Spannung UB. Die Initialisierung beginnt bei S200. An ihrem Anfang steht bei S202 die Messung der Betriebsspannung UB, die als Beispiel einen Wert irgendwo zwischen 20 und 160 V haben kann, aber naturgemäß auch größer oder kleiner sein könnte. Sie wird gemessen am A/D-Wandler 184 des $\mu$C 36. Aus ihr werden die PWM-Werte pwm3 (für den FET-Transistor T3) und pwm4 (für den FET-Transistor T4) ermittelt und über die Widerstände 104 bzw. 106 den Gates der Transistoren T3 bzw. T4 zugeführt, wobei immer nur einer dieser beiden Transistoren aktiviert sein kann und der andere gesperrt ist.

Bei S204 beginnt der Start der Hauptschleife. Bei S206 wird geprüft, ob der TIMEOUT-Zähler 29 (im $\mu$C 36) aktiviert ist, vgl. Fig. 5. Falls Nein, wird er im Schritt S210 aktiviert. Falls die Antwort bei S206 Ja lautet, geht die Routine zum Schritt 212, ebenso im Anschluss an den Schritt S210.

In S212 wird der Strom $i_1$ (oder $i_1$') im Strang 26 mittels A/D-Wandlung erfasst, z.B. 16.000 Mal pro Sekunde.

In S214 werden die Messungen ausgewertet, und zwar mittels Case-Anweisungen, wobei

0 = Suche und Verifizierung des Maximums 114 (Fig. 6)
1 = Suche und Verifizierung des Minimums 116 (Fig. 6)
2 = Suchen und Verifizierung des Zeitpunkts 118 für die Kommutierung.

Je nach der augenblicklichen Kennziffer 0, 1 oder 2 folgen die entsprechenden Routinen wie folgt:

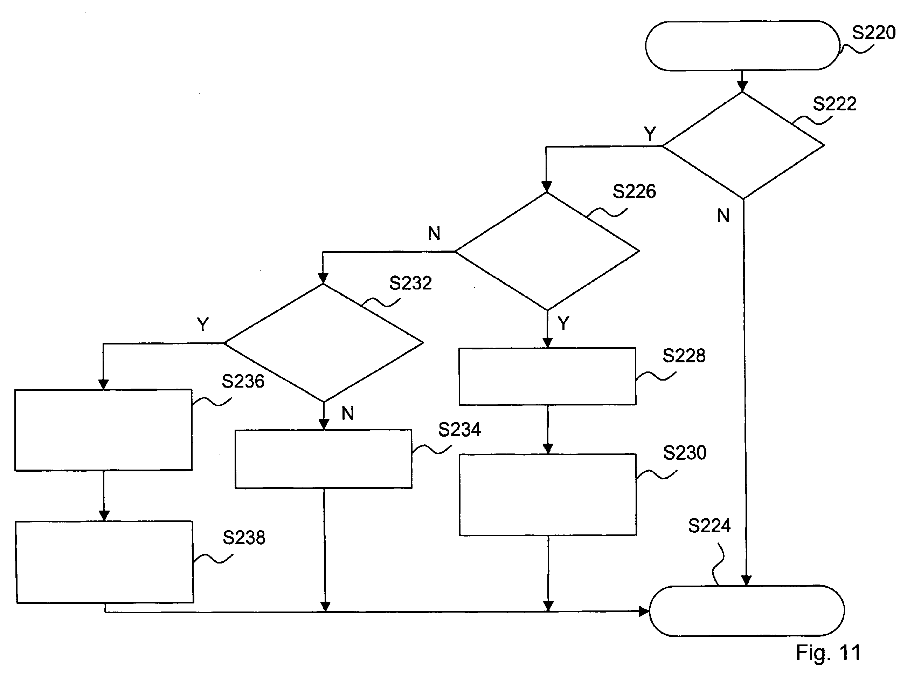

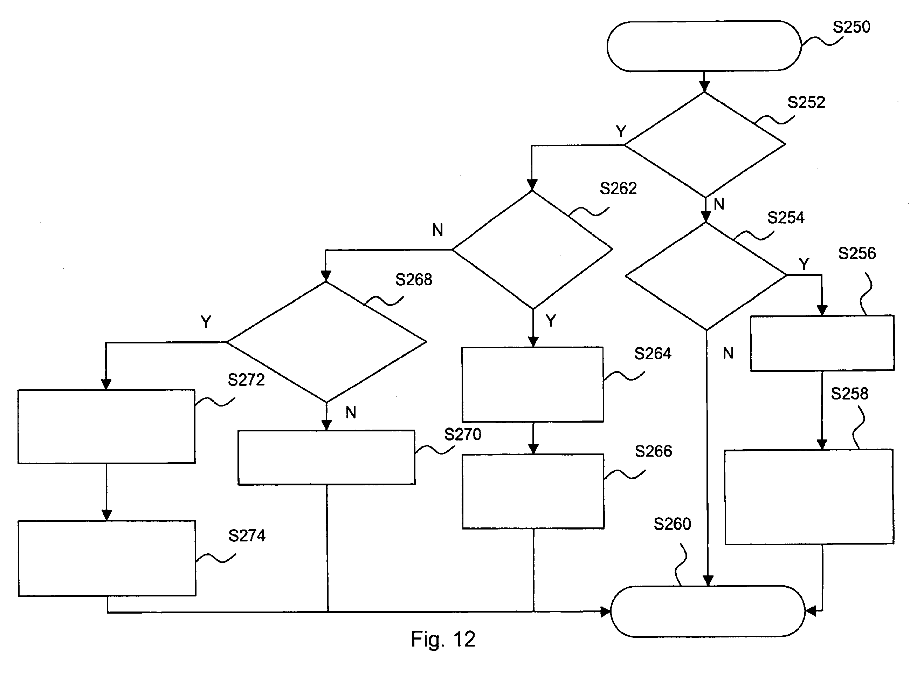

S220 - Maximumsuche und Verifizierung (Fig. 11)
S250 - Minimumsuche und Verifizierung (Fig. 12)
S280 - Suchen des Kommutierungszeitpunkts und Verifizierung (Fig. 13)

Beim Suchen des Maximums (S220) wird zunächst in S222 geprüft, ob der Strom $i_1$ einen bestimmten Wert $i_{1min}$ überschreitet. Dadurch wird sichergestellt, dass eine Auswertung nur dann stattfindet, wenn der Strom $i_1$ auch wirklich ansteigt.

Übersteigen die gemessenen Stromwerte dieses Limit $i_{1min}$, so wird in S226 geprüft, ob ein neues Maximum $i_{maxNEW}$ erreicht wurde. Wenn Ja, wird in S228 dieses Maximum abgespeichert, und in S230 wird der Zähler für die Verifizierung zurückgesetzt. Wird das Maximum nicht mehr überschrieben, so wird in S232 die Anzahl der Messungen gezählt, bei denen das Maximum nicht mehr erreicht wurde. Es muss eine bestimmte Anzahl an aufeinander folgenden Messungen vorliegen, die das Maximum nicht mehr überschreiben, damit das zuvor ermittelte Maximum akzeptiert wird. Dadurch wird verifiziert, dass es sich um ein Maximum handelt. Falls das nicht der Fall ist, wird in S234 der Zählerstand des Verifizierungszählers erhöht.

Diese Anzahl der Messungen für die Verifizierung ist drehzahlabhängig und kann z.B. einer Tabelle entnommen werden. Bei niedrigen Drehzahlen ist die Änderung des Stromes $i_1$ zwischen zwei Messwerten geringer als bei höheren Drehzahlen, vgl. Fig. 7, und deshalb werden pro Kommutierung mehr Messwerte erfasst als bei hohen Drehzahlen. Somit ist die Zahl der Messungen bei niedrigen Drehzahlen größer.

Wird diese Anzahl von Messungen überschritten, was in S232 festgestellt wird, so wird in S236 der Status der Messung erhöht, d.h. es wird begonnen, das Minimum zu suchen. Dazu wird der Wert für das Minimum mit dem ermittelten Maximum vorbesetzt, vgl. S238, um überhaupt ein neues Minimum finden zu können, da die Ermittlung des Minimums die anfängliche Kenntnis eines höheren Werts voraussetzt.

Bei der Ermittlung des Minimums 116 (Fig. 12) wird zunächst in S252 geprüft, ob der Absolutwert des Stromes $i_1$ (oder $i_1$') deutlich unter dem Maximum 114 liegt. Erst dann wird das Minimum ausgewertet. Dazu wird von dem in S238 gespeicherten Wert, der z.B. 2 A für den augenblicklichen Zustand des Motors betragen kann, ein Offset abgezogen, z.B. 10 %, so dass sich im Beispiel in S252 ein Vergleichswert von 1,8 A ergibt, und es wird also in S252 bei diesem Beispiel geprüft, ob der Strom $i_1$ (oder $i_1$') deutlich niedriger ist als 2 A.

Solange in S252 die Antwort Nein lautet, wird in S254 geprüft, ob der Absolutwert des Stromes $i_1$ (oder $i_1$') das gespeicherte Maximum um einen bestimmten Wert überschreitet, der in S254 als "positiver Offset" bezeichnet wird. Ist dies der Fall, so erfolgt die Kommutierung gemäß S256 bereits dann, wenn in S254 die Antwort Ja lautet, und es wird anschließend in S258 eine neue Messung initialisiert, und der Status der Messung wird auf S220 (Maximumsuche) zurückgesetzt. Dann endet hier die Routine bei S260, also "Ende".

Falls in S252 die Antwort Ja lautet, d.h. die Messwerte liegen deutlich unter dem Maximum, geht die Routine zum Schritt S262, und dort wird geprüft, ob der neue Messwert auch ein neues Minimum ist. Wenn Ja, wird in S264 das neue Minimum abgespeichert, und der Zähler für die Verifizierung wird zurückgesetzt.

Analog zur Suche nach dem Maximum muss bei der Suche nach dem Minimum eine Anzahl aufeinander folgender Messungen vorliegen, die das zuletzt ermittelte Minimum nicht mehr unterschreiten. Erst dann wird die Suche nach dem Minimum beendet. Auch hier ist der Wert für diese Anzahl drehzahlabhängig, und der Zähler für diese Anzahl wird in S266 auf Null gesetzt.

Wenn ein Minimum gefunden wurde, wird beim nächsten Durchlauf in S268 geprüft, ob die vorgegebene Zahl von aufeinander folgenden Messungen erfolgt ist, und falls Nein, wird in S270 dieser Zähler (S268) entsprechend erhöht.

Falls in S268 die Antwort Ja lautet, d.h. die Zahl der Messungen entspricht der Vorgabe, wird in S272 der Status der Messung erhöht, d.h. es wird nun der Kommutierungszeitpunkt gesucht. Dazu wird in S274 die Höhe des Kommutierungsstromes an der Stelle 118 berechnet, bei dessen Überschreiten die Kommutierung erfolgt. Dazu geht die Routine wieder zu S260.

Durch unterschiedliche Stromwerte für die Kommutierung kann die Größe der Frühzündung beeinflusst werden. So kann z.B. die Kommutierung dann erfolgen, wenn der Strom im Stromschwanz die Höhe des Stromes im Maximum des Strom rückens 114 erreicht hat.

Eine andere Möglichkeit wäre, bereits beim Erfassen des Minimums 116 zu kommutieren. Dann wäre die Frühzündung noch größer. In diesem Fall würde eine weitere Suche nach dem Kommutierungszeitpunkt entfallen, und der Status der Messung müsste zurückgesetzt werden, damit sofort wieder mit der Suche eines neuen Maximums begonnen werden kann.

**Fig. 13** zeigt die Routine 280 für das Suchen des Kommutierungszeitpunkts, der in Fig. 6 und 7 mit 118 für die positive Halbwelle und mit 118' für die negative Halbwelle bezeichnet ist. Wie man besonders aus Fig. 7 ersieht, ergeben sich für jede Halbwelle andere Werte, d.h. jede Halbwelle muss separat vermessen werden. Hierzu wird in S282 geprüft, ob der Absolutwert des gemessenen Stromes i1 (oder i1') größer ist als ein gewünschter Kommutierungsstrom. Hierfür gibt es verschiedene Möglichkeiten:

a) Man kann kommutieren kurz nach dem Zeitpunkt, an dem das Minimum 116 erfasst wurde. Das ergibt eine frühzeitige Kommutierung, die man oft als "Frühzündung" bezeichnet, obwohl bei einem Elektromotor nichts "gezündet" wird.

b) Man kann kommutieren kurz nach dem Zeitpunkt, an dem der Stromschwanz 117 (Fig. 6) den Wert des Stromrückens 114 erreicht hat. Dadurch wird die Frühzündung weniger stark.

c) Man kann auch kommutieren bei einem Stromwert, der dem Wert am Stromrücken 114 plus einem Zuschlag von X % entspricht, wodurch die Frühzündung noch schwächer wird, doch kann sich der Nachteil ergeben, dass die Kommutierung bei einem zu hohen Strom erfolgt, der erst über einen Kreisstrom abgebaut werden muss und der möglicherweise zu einer reduzierten Lebensdauer der Leistungstransistoren führt. Der Wert X kann auch abhängig von der Drehzahl des Motors 20 sein, z.B. in der Weise, dass er mit zunehmender Drehzahl abnimmt.

Das Erreichen des Referenzwertes des Stromes zum Zeitpunkt der Kommutierung, also z.B. zum Zeitpunkt des Erreichens des Motorstroms an der Stelle 118 oder 118' der Fig. 6, sollte vor der Kommutierung noch verifiziert werden. Deshalb wird auch hier der Verifizierungszähler verwendet, und die Kommutierung erfolgt erst, wenn der Strom $i_1$ (oder $i_1'$) den Referenzwert während einer bestimmten Zahl von Messwerten überschrieben hat. Diese Zahl von Messwerten ist hier sehr klein, d.h. es sollen nur einzelne Ausreißer (outliers) herausgefiltert werden. Z.B. kann man dann kommutieren, wenn der Referenzwert zwei Mal hintereinander überschrieben wurde. (Zwischen zwei aufeinander folgenden Messungen liegt z.B. eine Zeitspanne von etwa 60 μs entsprechend der Zeit für den Durchlauf durch eine einzelne Hauptschleife der Routine gemäß Fig. 10.)

In S282 wird geprüft, ob der Absolutwert des augenblicklich gemessenen Stromes $i_1$ (oder $i_1'$) größer ist als der zuvor in S274 berechnete Strom, bei dem die Kommutierung erfolgen soll.

Falls dieser Strom noch nicht erreicht wurde und deshalb die Antwort bei S282 Nein lautet, geht die Routine zu S284, wo der Zähler für die Verifizierung auf seinen Startwert zurückgesetzt wird. Anschließend geht die Routine zu S286 (Ende) und dann, gemäß Fig. 10, zu S288, also zu dem Ende der Hauptschleife und zurück zu S204, also dem Start der Hauptschleife, wo bei jedem Durchlauf ein Wert für die Größe des Stromes $i_1$ (oder $i_1'$) erfasst wird. (Das gilt genauso für die Routinen S220 und 250).

Wenn in S282 die Antwort Ja lautet, .d.h. der in S212 gemessene Stromwert hat den in S274 berechneten Vorgabewert überschritten, geht die Routine der Fig. 13 zum Schritt S290, wo der in S284 zurückgesetzte Verifizierungszähler abgefragt wird. Hat dieser noch nicht genügend Verifizierungswerte gezählt, so wird er in S292 erhöht, und die Hauptschleife (Fig. 10) wird erneut durchlaufen. Lautet aber in S290 die Antwort Ja, so wird im Schritt S294 kommutiert. Dies entspricht dann der Stelle 118 oder 118' der Fig. 6. Es fließt dann ein Kreisstrom i* oder i*', und in S296 wird eine neue Messung initialisiert, und der Status der Messung wird auf "Messung und Verifizierung des Strommaximums" gesetzt, entsprechend der Routine in Fig. 11. Dabei werden das bisherige Maximum und der Verifizierungszähler gelöscht, und der Timeout-Zähler wird deaktiviert und anschließend in der Hauptschleife (Fig. 10) gelöscht und neu gestartet, vgl. dort S210.

Hier werden also pro Sekunde sehr viele Strommessungen durchgeführt (S212 in Fig. 10), d.h. bei jedem Durchlauf durch die Hauptschleife (Fig. 10) wird ein Stromwert gemessen und digitalisiert. Beim beschriebenen Ausführungsbeispiel sind das z.B. pro Sekunde etwa 16.000 Schleifen und folglich etwa 16.000 Strommessungen, wobei die Zahlen abhängig von der Dauer der einzelnen Schleifen variieren können. Insgesamt hängt die Zahl der Schleifen von der Leistungsfähigkeit des µC 36 ab.

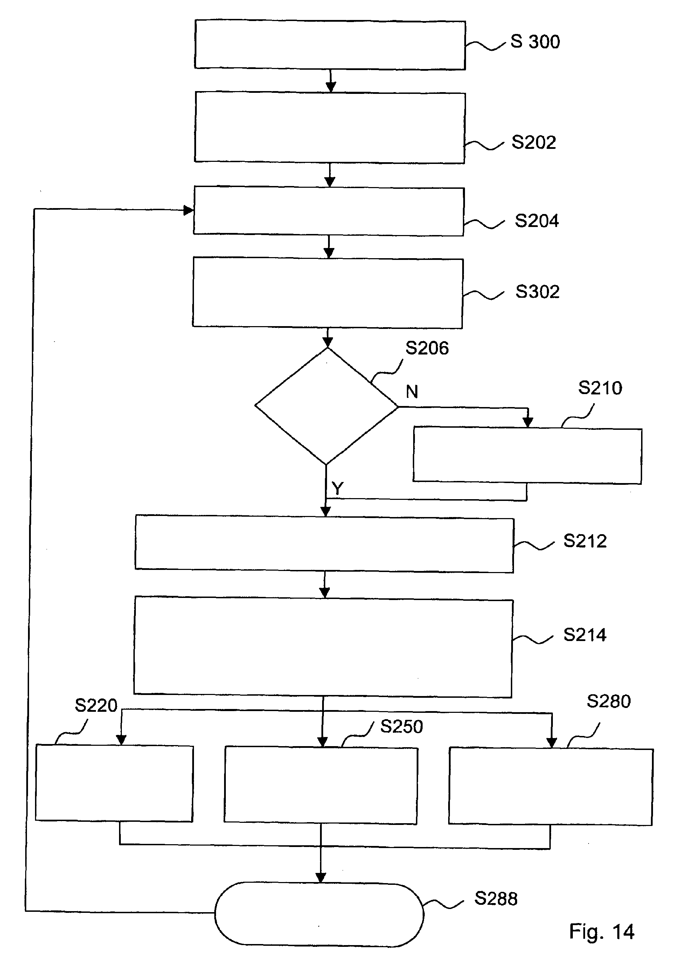

**Fig. 14** zeigt ein Flussdiagramm für einen Motor, der an eine stark fluktuierende Gleichspannung angeschlossen ist. Dies kann z.B. bei einem Lüfter der Fall sein, dessen Motor mit einer gleichgerichteten Wechselspannung betrieben wird.

Der Unterschied zu Fig. 10 liegt in dem Programmschritt S302 der Fig. 14, der zwischen den Programmschritten S204 und S206 liegt. Im Schritt S302 wird die Versorgungsspannung $U_B$ bei jedem Schleifendurchlauf erfasst, also mehr als 10.000 Mal pro Sekunde, und die Tastverhältnisse pwm3 und pwm4 werden entsprechend oft angepasst, wenn Schwankungen von $U_B$ auftreten, so dass die Spannung $U_m$ am Motor 20 sehr konstant ist.

Zusätzlich findet in S202 - außerhalb der Hauptschleife - direkt nach dem Einschalten auch eine Messung der Versorgungsspannung $U_B$ statt, und nach dem Ergebnis dieser Messung werden die Tastverhältnisse pwm3 und pwm4 für den Anlauf bzw. vor Beginn der Strommessung ausgelegt.

Nachteilig bei Fig. 14 ist, dass S302 zusätzliche Programmschritte erfordert, so dass die Zahl der pro Sekunde durchlaufenen Programmschleifen etwas kleiner wird, wobei aber durch die sehr exakte Konstanthaltung der Spannung $U_m$ am Motor die Ruhe des Motorlaufs verbessert wird.

Im Übrigen ist gegenüber den Fig. 10 bis 13 die Wirkungsweise unverändert, und deshalb wird zur Vermeidung von Längen auf die dortige Beschreibung verwiesen.

Bei der Ausführungsform nach den Fig. 1 bis 5 ist eine Schaltung 80 zur Erzeugung eines Surrogatstromes erforderlich, wenn der Kreisstrom i* (oder i*') im Wicklungsstrang 26 nicht gemessen werden kann. Hierdurch wird bei dieser Ausführungsform eine Messung des Stromes $i_1$ zu jedem Zeitpunkt möglich.

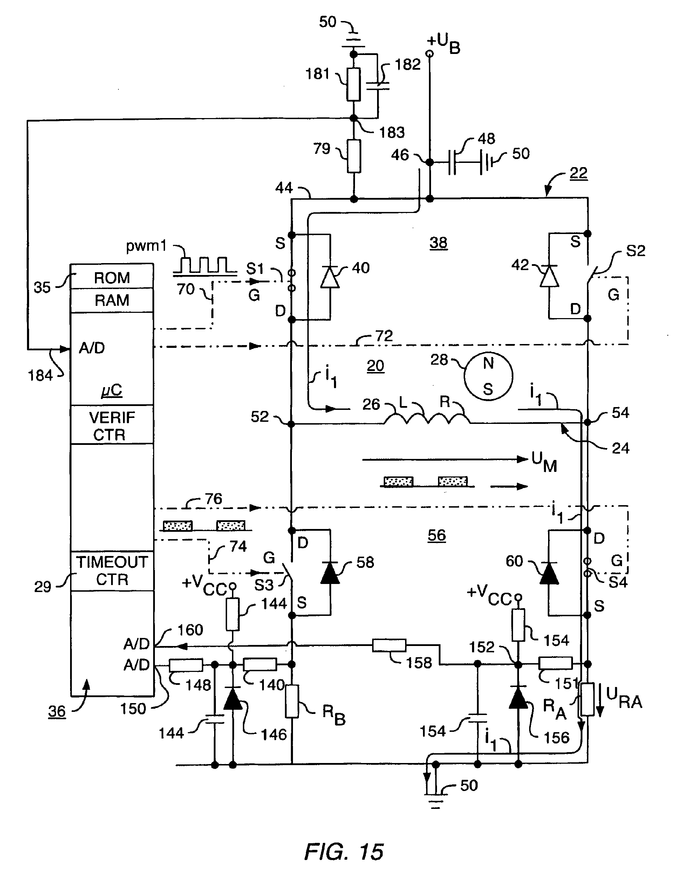

Bei der Variante nach den Fig. 15 bis 18 ist eine solche Hilfsschaltung 80 nicht notwendig, sondern eine Strommessung ist zu jedem Zeitpunkt möglich.

Da die H-Brücken 22 in beiden Fällen sehr ähnlich sind, werden für beide Varianten dieselben Bezugszeichen verwendet. In den Fig. 15 bis 18 sind also die Schaltelemente S1 bis S4 Feldeffekttransistoren in der gleichen Weise wie bei Fig. 4. Der Unterschied besteht darin, dass bei den Fig. 1 bis Fig. 5 die Kommutierung durch die oberen FETs S1 und S2 bewirkt wird, während die unteren FETs S3 und S4 mittels der PWM-Signale pwm3 oder pwm4 mit einem variablen Tastverhältnis getaktet werden. Dagegen wird bei der Variante nach den Figuren 15 bis 18 die Kommutierung durch die unteren FETs S3 und S4 bewirkt, während die oberen FETs mittels der PWM-Signale pwm1 bzw. pwm2 "getaktet", also ein- und ausgeschaltet werden.

**Bei den Fig. 1 bis 5 gilt also:**

FET T1 leitend: Takten von T4 mittels des PWM-Signals pwm4. Im Normalfall wird dabei kein PWM-Signal pwm3 erzeugt.

FET T2 leitend: Takten von T3 mittels des PWM-Signals pwm3. Im Normalfall wird dabei kein PWM-Signal pwm4 erzeugt.

**Bei den Fig. 15 bis 18 gilt:**

FET S4 leitend: Takten von FET S1 mittels des PWM-Signals pwm1. Im Normalfall wird dabei kein PWM-Signal pwm2 erzeugt.

FET S3 leitend: Takten von FET S2 mittels PWM-Signal pwm2. Im Normalfall wird während dieser Zeit kein PWM-Signal pwm1 erzeugt.

Es ist jedoch darauf hinzuweisen, dass der Wirkungsgrad des Motors in beiden Fällen noch erhöht werden kann, wenn während des Fließens eines Kreisstroms beide FETs, die im Wege dieses Kreisstroms liegen, leitend gesteuert werden, da ein leitender FET einen sehr niedrigen Innenwiderstand für Ströme hat, die in beliebiger Richtung durch diesen FET fließen.

Wie Fig. 15 zeigt, ist dort die Source S des (nur schematisch angedeuteten) FET-Transistors S3 über einen Messwiderstand $R_B$ mit Masse 50 verbunden, und die Source des FET-Transistors S4 ist über einen Messwiderstand $R_A$ ebenfalls mit Masse 50 verbunden. Außerdem ist die Source S des FET-Transistors S3 über einen Widerstand 140 mit einem Knotenpunkt 142 verbunden, der über einen Widerstand 144 mit der geregelten Spannung + Vcc (z.B. +5 V) verbunden ist. Ferner liegen zwischen dem Knotenpunkt 142 und Masse 50 ein Kondensator 144 und eine Diode 146, deren Anode an Masse 50 liegt, und der Knotenpunkt 142 ist über einen Widerstand 148 mit einem A/D-Anschluss 150 des µC 36 verbunden.

In der gleichen Weise ist die Source S des FET S4 über einen Widerstand 151 mit einem Knotenpunkt 152 verbunden, der über einen Widerstand 154 mit der geregelten Spannung +Vcc verbunden ist. Zwischen dem Knotenpunkt 152 und Masse 50 liegen ein Kondensator 154 und eine Diode 156, deren Anode an Masse 50 liegt. Der Knotenpunkt 152 ist über einen Widerstand 158 mit einem A/D-Anschluss 160 des µC 36 verbunden.

Fig. 15 zeigt den Fall, dass beide Transistoren S1 und S4 gleichzeitig leitend sind. In diesem Fall fließt ein Strom vom positiven Anschluss $U_B$ über den FET S1, den Wicklungsstrang 26, den FET S4 und den Messwiderstand $R_A$ nach Masse 50. In diesem Fall entsteht am Messwiderstand $R_A$ ein Spannungsabfall $U_{RA}$. Letzterer wird durch den Kondensator 154 geglättet und dem A/D-Eingang 160 des µC 36 zugeführt. Dort wird er beim Schritt S212 (Fig. 10) in einen digitalen Stromwert umgewandelt.

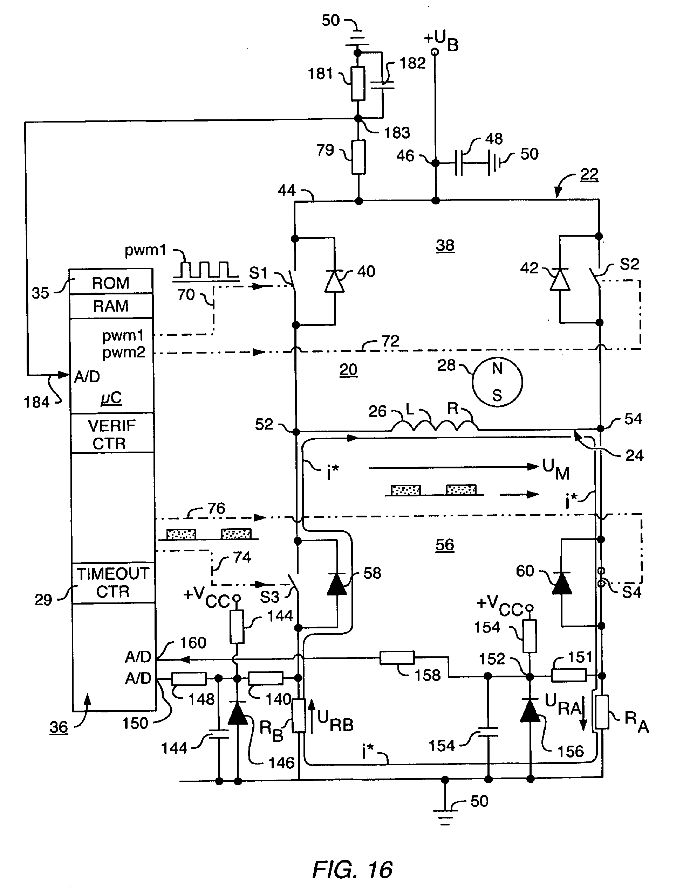

Fig. 16 zeigt den Fall, dass der FET S4 weiterhin leitend ist, währen der FET S1 durch das PWM-Signal pwm1 unterbrochen wird, so dass die Energiezufuhr vom Anschluss $+U_B$ unterbrochen wird.

Jedoch ist im magnetischen Feld des Wicklungsstranges 26 Energie E gespeichert, vgl. die Gleichung (6), und diese Energie bewirkt, dass ohne Unterbrechung der Strom $i_1$ in Form eines abnehmenden Kreisstromes i* weiter fließt, und zwar vom Knotenpunkt 54 über den FET S4, den Widerstand $R_A$, den Widerstand $R_B$, die Freilaufdiode 58 (oder ggf. den leitend gesteuerten FET S3), den Knotenpunkt 52, und den Wicklungsstrang 26 zurück zum Knotenpunkt 54.

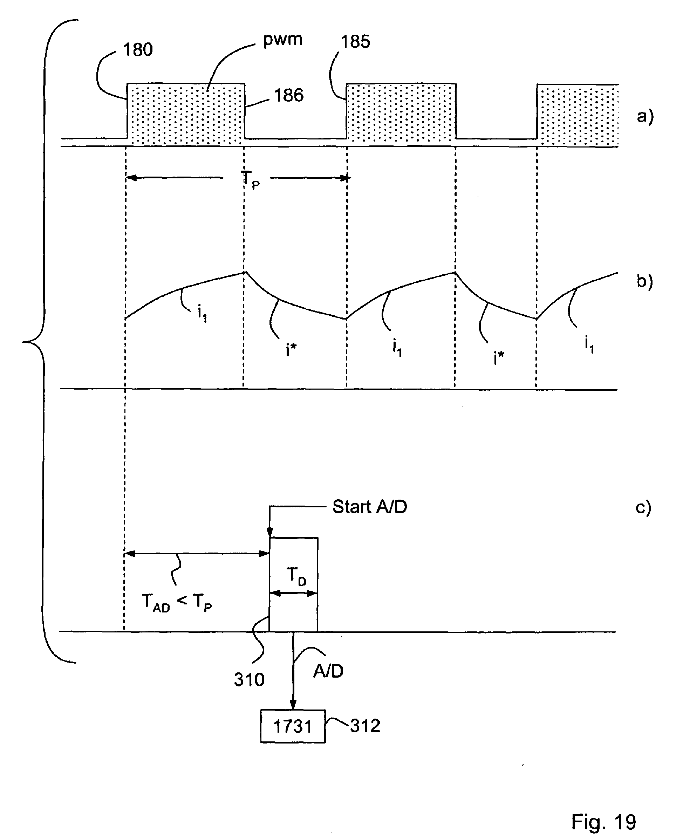

Dieser Kreisstrom i* nimmt schnell ab. Er verursacht am Messwiderstand $R_A$ einen Spannungsabfall $U_{RA}$, der dem A/D-Eingang 160 zugeführt und dort durch den Schritt S212 der Fig. 10 im Verlauf jeder Schleife des Programms gewöhnlich einmal digitalisiert wird. Er verursacht auch einen Spannungsabfall $U_{RB}$ am Messwiderstand $R_B$, aber dieser Spannungsabfall hat eine ungeeignete Polarität und wird deshalb durch die Diode 146 eliminiert und nicht berücksichtigt. Wie Fig. 19 zeigt, hat der Spannungsabfall $U_{RA}$ der Fig. 15 eine zunehmende Tendenz, und der Spannungsabfall $U_{RA}$ der Fig. 16 hat eine abnehmende Tendenz, aber durch die Siebkondensatoren 144, 154, und durch die Induktivität L des Wicklungsstrangs 26, wird der Spannungsverlauf geglättet, so dass der Strom durch den Wicklungsstrang 26 zu jedem Zeitpunkt mit guter Genauigkeit digitalisiert werden kann.

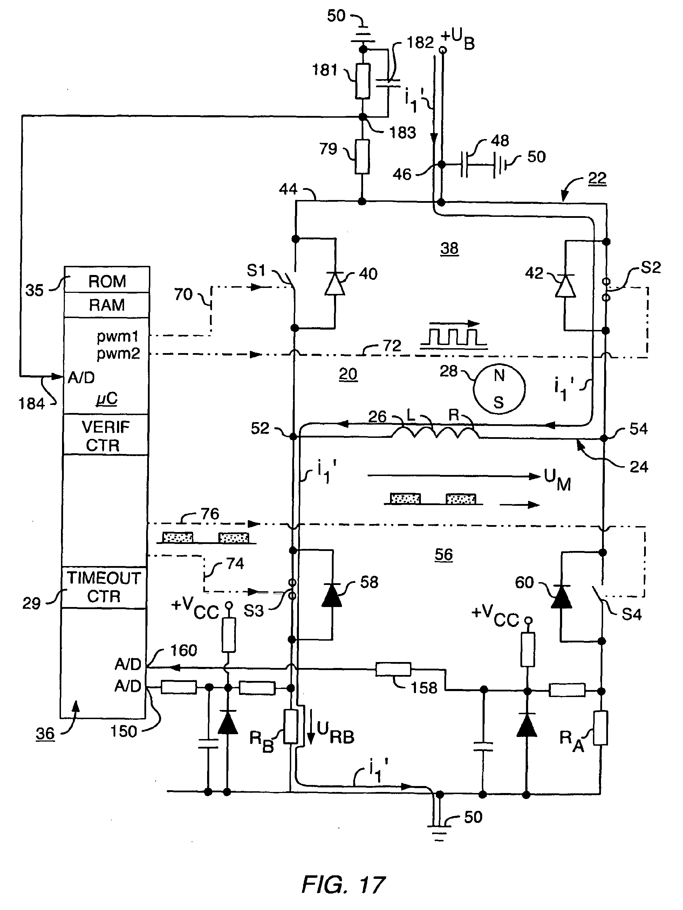

Fig. 17 zeigt den Strom nach einer Kommutierung, d.h. der FET S1 ist nun nichtleitend, und der FET S2 ist leitend. Der FET S3 wird durch das Signal pwm3 getaktet, und der FET S4 ist nicht leitend.

Wenn S2 und S3 gleichzeitig leitend sind, fließt ein ansteigender Strom $i_1$' vom Anschluss +UB über den FET S2, den Wicklungsstrang 26, und den FET S3 nach Masse 50. Dieser Strom erzeugt am Messwiderstand $R_B$ einen Spannungsabfall URB, der durch den A/D-Wandler 150 digitalisiert werden kann.

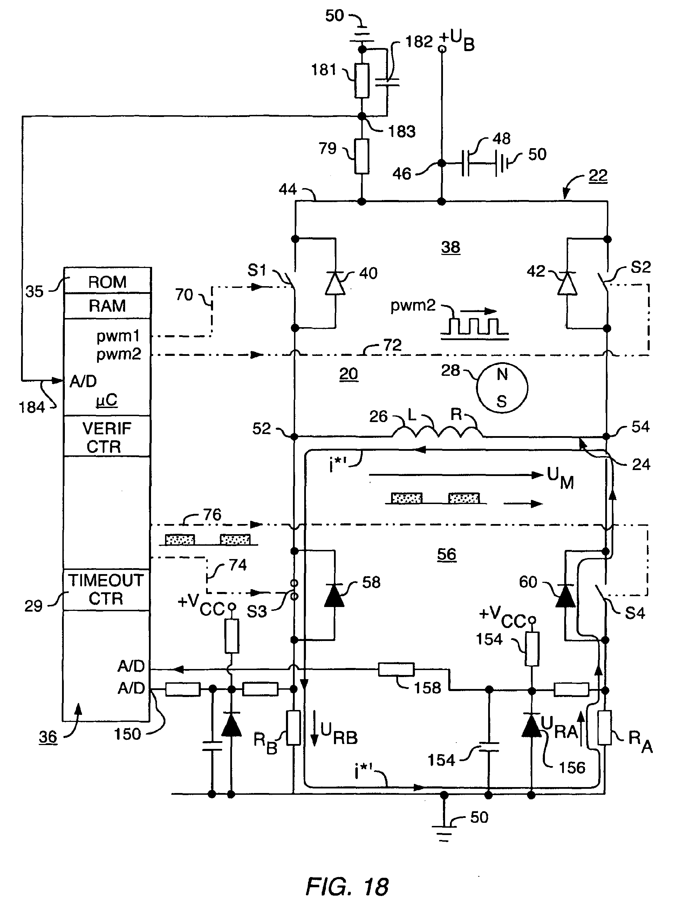

**Fig. 18** zeigt den Fall, dass im Anschluss an den Zustand nach Fig. 17 der FET S2 durch das Signal pwm2 nicht leitend gemacht wird, so dass vom Anschluss $U_B$ kein Strom in den Motor 20 fließen kann, d.h. die Energiezufuhr von außen wird unterbrochen.

Da im Wicklungsstrang 26 Energie E gespeichert ist, hält diese den Strom $i_1$' aufrecht, und zwar in Form eines Kreisstroms i*', der hier im Uhrzeigersinn fließt. Dieser Strom fließt vom Knotenpunkt 52 über den leitenden FET S3, den Messwiderstand $R_B$, den Messwiderstand $R_A$, die Freilaufdiode 60 und den Wicklungsstrang 26 zurück zum Knotenpunkt 52.

Dieser Kreisstrom i*' treibt den Rotor 28 an und nimmt deshalb rasch ab. Er verursacht am Messwiderstand $R_B$ einen Spannungsabfall $U_{RB}$, der dem A/D-Wandler 150 zugeführt wird und dort während des Schritts S212 der Fig. 10 im Verlauf einer Schleife des Programms digitalisiert wird.

Am Messwiderstand $R_A$ verursacht der Kreisstrom i*' einen Spannungsabfall $U_{RA}$, doch hat dieser Spannungsabfall eine ungeeignete Polarität und wird deshalb durch die Diode 156 kurzgeschlossen und nicht berücksichtigt.

Auf diese Weise kann also durch die Brückenschaltung 22 nach den Fig. 15 bis 18 der Strom im Wicklungsstrang 26 auch dann gemessen werden, wenn in diesem ein Kreisstrom i* oder i*' fließt.

**Fig. 19** zeigt bei a) ein PWM-Signal, z.B. pwm1, pwm2, pwm3 oder pwm4. Dieses hat eine Periodendauer Tp von z.B. 60 µs. Dieses Signal wird bei einer Schaltflanke 180 hoch, und wenn es hoch ist, wird z.B. in Fig. 15 der FET S1 leitend, so dass ein Strom $i_1$ fließen kann, der in Fig. 19b) dargestellt ist. Dieser Strom steigt an und endet, wenn das PWM-Signal nach einer Signalflanke 186 niedrig wird, wodurch in Fig. 15 der FET S1 nichtleitend wird.

Dadurch fließt, wie in Fig. 16 dargestellt, ein Kreisstrom i* im unteren Teil der H-Brücke 22, der rasch abnimmt.

Am Ende der Periodendauer $T_p$ (Fig. 19a) kommt erneut eine Schaltflanke 185, der FET S1 wird wieder eingeschaltet, und es fließt wieder ein Strom $i_1$ von außen in den Motor.

Besonders vorteilhaft ist, wenn ab der Schaltflanke 180 eine Zeitspanne $T_{AD}$ gemessen wird, die kleiner als die Periodendauer $T_p$ ist, und wenn am Ende dieser Zeitspanne, also an einer Stelle 310 der Fig. 19c), die A/D-Wandlung gestartet wird. Diese Art der Steuerung ist bei manchen Mikroprozessoren möglich, z.B. beim Typ PIC18F1330.

Die A/D-Wandlung beginnt mit einer Speicherung des augenblicklichen analogen Spannungswerts am betreffenden Messwiderstand. Dieser Wert wird in einer Sample-and-Hold-Schaltung gespeichert, was nur Nanosekunden dauert, und dieser gespeicherte Wert wird anschließend digitalisiert.

Während seiner Speicherung sollte der analoge Wert frei von Störungen sein, und deshalb wäre z.B. seine Speicherung während einer Schaltflanke 186 ungünstig. Die Speicherung sollte vielmehr entweder vor der Schaltflanke 186 oder nach ihr erfolgen. Letzteres wird bevorzugt, da in diesem Bereich, also während des Fließens eines Kreisstroms i* oder i*', der Energieinhalt des Motors abnimmt und folglich keine starken Störungen auftreten können.

Es ist jedoch darauf hinzuweisen, dass dies eine bevorzugte Variante ist, dass aber der Motor auch ohne diese speziellen Maßnahmen sicher und ruhig läuft.

Die Zeitspanne für die Digitalisierung ist bei $T_D$ angedeutet und ist sehr klein, z.B. 10 $\mu$s.

Das Resultat der Digitalisierung, z.B. "1731", ist bei 312 in Fig. 19 angedeutet. (Das ist naturgemäß nur ein symbolischer Wert, um das Verständnis zu erleichtern.)

Wie sich aus der vorhergehenden Beschreibung ergibt, sind im Rahmen der Erfindung vielfache Abwandlungen und Modifikationen möglich.

**Legende zu Figur 10**

| | |
|---|---|
| S200 | Initialisierung |
| 5202 | Messung UB |
| | Ermitteln der Anlauf-PWM |
| S204 | Start Hauptschleife |
| S206 | Timeout aktiviert? |
| S210 | Timeout aktivieren |
| S212 | Strom im entsprechenden Wicklungszweig mit AD-Wandlung erfassen |
| 5214 | Auswertung Status der Messung |
| | |
| | 0 = Maximum suchen |
| | 1 = Minimum suchen |
| | 2 = Kommutierungszeitpunkt suchen |
| | |
| S220 | Maximum suchen |
| S250 | Minimum suchen |
| S280 | Kommutierungszeitpunkt suchen, ggf. kommutieren und Timeout deaktivieren |
| S288 | Ende Hauptschleife |
| Y | = JA |
| N | = Nein |

**Legende zu Figur 11**

| | |
|---|---|
| S220 | Maximum suchen |
| S222 | $|i_1| > |i_{min}|$? |
| S224 | Ende |
| S226 | $|i_1| > |i_{maxOLD}|$? |
| S228 | $i_{maxNEW}$ :--> $i_{maxOLD}$ |
| S230 | Verifikationszähler zurücksetzen |
| S232 | CTRMEAS > Max? |
| S234 | Zähler erhöhen |
| S236 | Status der Messung erhöhen |
| S238 | Minimaler Strom vorbesetzen |
| Y | = Ja |
| N | = Nein |

**Legende zu Figur 12**

| | |
|---|---|
| S250 | Minimum suchen |
| S252 | Strom < (Maximum - negatives Offset)? |
| S254 | Strom > (Maximum + positives Offset)? |
| S256 | Kommutierung |
| S258 | Neue Messung initialisieren, Status der Messung zurücksetzen |
| S260 | Ende |
| S262 | Strom < Minimum |

5264 Neues Minimum abspeichern
S266 Zähler zurücksetzen
S268 Zähler > Anzahl Messungen Minimum?
S270 Zähler erhöhen
S272 Status der Messung erhöhen
S274 Kommutierungsstrom berechnen
Y = Ja
N = Nein

**Legende zu Figur 13**

5280 Kommutierungszeitpunkt suchen
S282 Strom > Kommutierungsstrom?
S284 Zähler zurücksetzen
S286 Ende
S290 Zähler > Anzahl Messungen Kommutierungszeitpunkt
S292 Zähler erhöhen
S294 Kommutierung
S296 Neue Messung initialisieren, Status der Messung zurücksetzen
Y = Ja
N = Nein

**Legende zu Figur 14**

S300 Initialisierung
5202 Messung UB; Ermitteln der Anlauf-PWM
S204 Start Hauptschleife
S302 Erfassung UB
Korrektur von pwm3 & pwm4
S206 Timeout aktiviert?
S210 Timeout aktivieren
S212 Strom im entsprechenden Wicklungszweig mit AD-Wandlung erfassen
S214 Auswertung Status der Messung

0 = Maximum suchen
1 = Minimum suchen
2 = Kommutierungszeitpunkt suchen

5220 Maximum suchen
S250 Minimum suchen
S280 Kommutierungszeitpunkt suchen, ggf. kommutieren und Timeout deaktivieren
5288 Ende Hauptschleife
Y = Ja
N = Nein

**Patentansprüche**

1. Elektronisch kommutierter Motor (20), welcher aufweist:

Einen ersten Anschluss (46) zum Anschließen an einen positiven Pol einer Gleichspannungsquelle (47);
einen zweiten Anschluss (50) zum Anschließen an einen negativen Pol (50) dieser Gleichspannungsquelle (47);
einen Stator mit einer Statorwicklungsanordnung, welche mindestens einen Wicklungsstrang (26) aufweist;
einen permanentmagnetischen Rotor (28) welcher im Betrieb bei seiner Drehung die Form des Stromes ($i_1$, $i_1'$)

in der Statorwicklungsanordnung (26) beeinflusst;

eine Erfassungsanordnung (64), welche dazu ausgebildet ist, einen aus der Gleichspannungsquelle (47) dem Motor (20) zugeführten Strom in zeitlichen Abständen zu erfassen und zu digitalisieren, welcher Strom im Betrieb vom ersten Anschluss (46) durch die Erfassungsanordnung (64) zum zweiten Anschluss (50) fließt,

einen programmgesteuerten Rechner (36);

eine Messvorrichtung (36, 79, 181, 182, 184) zur Messung der Versorgungsspannung ($U_B$), welche dazu ausgebildet ist, einen von dieser Spannung ($U_B$) abhängigen Wert zu digitalisieren,

wobei mindestens ein Element (T3, T4) der H-Brücke (22) durch ein PWM-Signal (pwm3, pwm4) steuerbar ist, dessen Tastverhältnis eine Größe hat, die bei einer Änderung der Versorgungsspannung ($U_B$) des Motors (20) diese Spannungsänderung mindestens nahezu kompensiert, um dem Motor (20) im Betrieb eine etwa konstante Gleichspannung ($U_m$) zuzuführen.

wobei der programmgesteuerte Rechner (36) dazu ausgebildet ist, die Messung der Versorgungsspannung ($U_B$) auch nach dem Einschalten des Motors fortzusetzen, um bei einer Änderung der Versorgungsspannung ($U_B$) das Tastverhältnis (pwm1, pwm2; pwm3, pwm4) des PWM-Signals auch im Lauf des Motors an die augenblickliche Höhe der Versorgungsspannung ($U_B$) anzupassen,

wobei der Absolutwert des Motorstroms ($i_1$, $i_1$') im Betrieb verschiedene Abschnitte aufweist, wie folgt:

einen ersten Abschnitt (113), im Folgenden Stromrücken genannt, der ausgehend von der Kommutierung (118, 118') bis zu einem Maximum (114) des Absolutwerts ansteigt,

einen zweiten Abschnitt (115), im Folgenden Stromsattel genannt, der ausgehend vom Maximum (114) bis zu einem Minimum (116) des Absolutwerts absinkt,

einen dritten Abschnitt (117), im Folgenden Stromschwanz genannt, der sich an den Stromsattel (115) anschließt;

und wobei der programmgesteuerten Rechner (36), zur Ausführung folgender Schritte ausgebildet ist:

a) aus den digitalisierten Stromwerten wird die Lage des Stromrückens (113) ermittelt;

b) aus den digitalisierten Stromwerten wird die Lage des Stromsattels (115) ermittelt;

c) ausgehend von den erfassten Stromwerten an Stromrücken (113) und/oder Stromsattel (115) wird ein Stromwert (118; 118') ermittelt, bei dem ein Kommutierungsvorgang beginnen soll;

d) wenn der Motorstrom ($i_1$, $i_1$') diesen Stromwert (118; 118') erreicht oder überschreitet, wird der Kommutierungsvorgang eingeleitet.

2. Motor nach Anspruch 1, bei welchem der programmgesteuerte Rechner (36) zur Durchführung folgender Schritte ausgebildet ist:

a) die Absolutwerte zeitlich einander folgender digitalisierter Stromwerte werden verglichen, um durch die Vergleiche ein im Bereich des Stromrückens (113) auftretendes Maximum (114) zu ermitteln und einen diesem Maximum (114) zugeordneten digitalisierten Stromwert (Max) zu speichern;

b) zeitlich nacheinander ermittelte digitalisierte Werte werden verglichen, um ein auf dieses Maximum (114) folgendes Minimum (116) des Absolutwerts im Bereich des Stromsattels (115) zu ermitteln.

3. Motor nach Anspruch 2, bei welchem der programmgesteuerte Rechner (36) zur Durchführung folgender Schritte ausgebildet ist:

Nach der Ermittlung des Maximums (114) im Bereich des Stromrückens (113) wird abgewartet, bis die Differenz zwischen dem diesem Maximum (114) zugeordneten Stromwert und dem augenblicklichen Stromwert einen vorgegebenen Mindestwert erreicht hat, bevor das auf dieses Maximum (114) folgende Minimum (116) des Absolutwerts ermittelt wird.

4. Motor nach Anspruch 3, bei welchem dann, wenn der vorgegebene Mindestwert nicht ermittelbar ist, die Ermittlung des Minimums (116) durch eine vorgegebene Korrekturmaßnahme ersetzt wird.

5. Motor nach Anspruch 4, bei welchem als Korrekturmaßnahme der Strom in der Statorwicklungsanordnung (26) auf eine Stromrichtung umgesteuert wird, welche einer anderen Drehrichtung zugeordnet ist.

6. Motor nach Anspruch 4 oder 5, bei welchem als Korrekturmaßnahme der Motor (20) mindestens zeitweise stromlos gemacht wird, um eine Überhitzung bei einer Blockierung des Motors zu verhindern.

**7.** Motor nach einem der vorhergehenden Ansprüche, bei welchem der programmgesteuerte Rechner (36) dazu ausgebildet ist, nach dem Einschalten des Motors eine Messung (S202) der Versorgungsspannung ($U_B$) durchzuführen, um zu diesem Zeitpunkt ein geeignetes Tastverhältnis (pwm1, pwm2; pwm3, pwm4) des PWM-Signals ermitteln und einstellen zu können.

**8.** Motor nach einem der vorhergehenden Ansprüche, bei welchem im Betrieb mindestens ein Element (T3, T4) der H-Brücke (22) durch ein PWM-Signal (pwm3, pwm4) ein- und ausschaltbar ist, so dass im eingeschalteten Zustand dieses Elements im Betrieb ein Strom ($i_R$) vom ersten Anschluss (46) über dieses Element und die Erfassungsanordnung (64) zum zweiten Anschluss (50) fließt, welcher Strom ($i_R$) durch die Erfassungsanordnung (64) erfassbar ist, und im ausgeschalteten Zustand dieses Elements (T3, T4) ein abnehmender Kreisstrom ($i^*$, $i^{*\prime}$) in der H-Brücke (22) fließt.

**9.** Motor nach Anspruch 8, bei welchem die Messanordnung (80) einen Kondensator (94) aufweist, dessen Ladespannung ($u_C$) im eingeschalteten Zustand des genannten Elements (T3, T4) eine Funktion des von der Erfassungsanordnung (64, 80) erfassten Motorstroms ($i_R$) ist und ihrerseits als Grundlage für die Erfassung und Digitalisierung des Motorstroms dient,
und dem eine Entladeschaltung (96) zugeordnet ist, um während des Fließens eines Kreisstroms ($i^*$, $i^{*\prime}$) eine abnehmende Ladespannung (uc) am Kondensator (94) zu erzeugen, die als Basis für die Strommessung während des Fließens dieses Kreisstroms ($i^*$, $i^{*\prime}$) geeignet ist.

**10.** Motor nach Anspruch 8 oder 9, bei welchem im Betrieb der Kreisstrom ($i^*$, $i^{*\prime}$) gemäß einer ersten Zeitkonstante ($\tau_W$) abnimmt, die hauptsächlich durch die elektrischen Daten (L, R) des Wicklungsstranges (26) beeinflusst ist, durch welchen dieser Kreisstrom ($i^*$, $i^{*\prime}$) fließt,
und bei welchem die Ladespannung ($u_C$) im Betrieb mit einer hieran angepassten zweiten Zeitkonstante ($\tau_C$) abnimmt, die durch die elektrischen Daten des Kondensators (94) und seines Entladekreises (96) beeinflusst ist.

**11.** Motor nach Anspruch 10, bei welchem die erste Zeitkonstante ($\tau_W$) und die zweite Zeitkonstante ($\tau_C$) aufeinander abgestimmt sind, so dass während des Fließens eines Kreisstroms ($i^*$, $i^{*\prime}$) eine Ladespannung (uc) am Kondensator (94) erfassbar ist, welche einen vergleichbar abnehmenden Verlauf hat wie der abnehmende Kreisstrom ($i^*$, $i^{*\prime}$).

**12.** Motor nach einem der Ansprüche 9 bis 11, bei welchem der Verlauf der Ladespannung (uc) des Kondensators (94) um einen Amplituden-Offset gegenüber dem Verlauf des in der Erfassungsvorrichtung (64) fließenden Stromes ($i_R$) versetzt ist.

**13.** Motor nach Anspruch 12, bei welchem durch den Amplituden-Offset die zu digitalisierende Spannung (uc) in einen anderen Messbereich des zugeordneten A/D-Wandlers (100) verschoben ist.

**14.** Motor nach einem der vorhergehenden Ansprüche, bei welchem die A/D-Wandlung so gesteuert ist, dass sie außerhalb der Schaltflanken (180, 186, 185) des PWM-Signals (pwm, pwm1, pwm2, pwm3, pwm4) eingeleitet wird.

**15.** Motor nach einem der vorhergehenden Ansprüche, bei welchem die A/D-Wandlung (310) so gesteuert ist, dass sie während des Fließens eines Kreisstroms ($i^*$, $i^{*\prime}$) eingeleitet wird.

**Claims**

**1.** Electronically commutated motor (20), which comprises:

A first connection (46) for connecting to a positive pole of a direct-voltage source (47);
a second connection (50) for connecting to a negative pole (50) of this direct-voltage source (47);
a stator having a stator winding arrangement, which has at least one phase winding (26);
a permanent-magnet rotor (28), which during operation upon its rotation influences the form of the current ($i_1$, $i_1{}^{\prime}$) in the stator winding arrangement (26);
a detecting arrangement (64), which is configured to detect and to digitise at time intervals a current supplied to the motor (20) from the direct-voltage source (47), which current during operation flows from the first connection (46) through the detecting arrangement (64) to the second connection (50), a program-controlled computer (36);
a measuring device (36, 79, 181, 182, 184) for measuring the supply voltage ($U_B$), which device is configured to digitise a value dependent on this voltage ($U_B$),

wherein at least one element (T3, T4) of the H-bridge (22) is controllable by a PWM signal (pwm3, pwm4), the pulse duty factor of which has a magnitude which, upon a change of the supply voltage ($U_B$) of the motor (20), at least almost compensates for this voltage change, in order to supply an approximately constant direct voltage ($U_m$) to the motor (20) during operation,

wherein the program-controlled computer (36) is configured to continue the measurement of the supply voltage ($U_B$) also after the motor has been switched on, in order, upon a change of the supply voltage ($U_B$), to adapt the pulse duty factor (pwm1, pwm2; pwm3, pwm4) of the PWM signal, also during the running of the motor, to the instantaneous level of the supply voltage ($U_B$), wherein the absolute value of the motor current ($i_1$, $i_1'$) during operation has different sections, as follows:

a first section (113), referred to hereinafter as current back, which rises to a maximum (114) of the absolute value starting from the commutation (118, 118'),
a second section (115), referred to hereinafter as current saddle, which falls to a minimum (116) of the absolute value starting from the maximum (114),
a third section (117), referred to hereinafter as current tail, which follows the current saddle (115);
and wherein the program-controlled computer (36) is configured to carry out the following steps:

a) the position of the current back (113) is determined from the digitised current values;
b) the position of the current saddle (115) is determined from the digitised current values;
c) a current value (118; 118') at which a commutation process is to begin is determined on the basis of the detected current values at current back (113) and/or current saddle (115);
d) if the motor current ($i_1$, $i_1'$) reaches or exceeds this current value (118; 118'), the commutation process is initiated.

2. Motor according to Claim, 1 in which the program-controlled computer (36) is configured to carry out the following steps:

a) the absolute values of digitised current values following one another in time are compared, in order to determine by the comparisons a maximum (114) occurring in the region of the current back (113) and to store a digitised current value (Max) assigned to this maximum (114);
b) digitised values determined successively in time are compared, in order to determine a minimum (116) of the absolute value following this maximum (114) in the region of the current saddle (115).

3. Motor according to Claim 2, in which the program-controlled computer (36) is configured to carry out the following steps:

After the determination of the maximum (114) in the region of the current back (113), there is a waiting period until the difference between the current value assigned to this maximum (114) and the instantaneous current value has reached a preset minimum value, before the minimum (116) of the absolute value following this maximum (114) is determined.

4. Motor according to Claim 3, in which, if the preset minimum value is not determinable, the determination of the minimum (116) is replaced by a preset correction measure.

5. Motor according to Claim 4, in which, as correction measure, the current in the stator winding arrangement (26) is reversed to a current direction which is assigned to another direction of rotation.

6. Motor according to Claim 4 or 5, in which, as correction measure, the motor (20) is at least temporarily de-energised, in order to prevent overheating in the event of a blocking of the motor.

7. Motor according to one of the preceding claims, in which the program-controlled computer (36) is configured to carry out a measurement (S202) of the supply voltage ($U_B$) after the motor has been switched on, in order to be able to determine and set a suitable pulse duty factor (pwm1, pwm2; pwm3, pwm4) of the PWM signal at this instant.

8. Motor according to one of the preceding claims, in which during operation at least one element (T3, T4) of the H-bridge (22) can be switched on and off by a PWM signal (pwm3, pwm4), so that in the switched-on state of this element during operation a current ($i_R$) flows from the first connection (46) via this element and the detecting arrangement (64) to the second connection (50), which current ($i_R$) is detectable by the detecting arrangement (64),

and in the switched-off state of this element (T3, T4) a decreasing circulating current (i*, i*') flows in the H-bridge (22).

9. Motor according to Claim 8, in which the measuring arrangement (80) comprises a capacitor (94), the charging voltage ($u_C$) of which in the switched-on state of the said element (T3, T4) is a function of the motor current ($i_R$) detected by the detecting arrangement (64, 80) and for its part serves as a basis for the detection and digitisation of the motor current, and to which is assigned a discharging circuit (96), in order to generate during the flow of a circulating current (i*, i*') a decreasing charging voltage ($u_C$) at the capacitor (94), which voltage is suitable as a basis for the current measurement during the flow of this circulating current (i*, i*').

10. Motor according to Claim 8 or 9, in which during operation the circulating current (i*, i*') decreases in accordance with a first time constant ($\tau_W$), which is influenced mainly by the electrical data (L, R) of the phase winding (26) through which this circulating current (i*, i*') flows,
and in which the charging voltage ($u_C$) during operation decreases with a second time constant ($\tau_C$) adapted thereto, which is influenced by the electrical data of the capacitor (94) and of its discharging circuit (96).

11. Motor according to Claim 10, in which the first time constant ($\tau_W$) and the second time constant ($\tau_C$) are matched to one another, so that during the flow of a circulating current (i*, i*') a charging voltage ($u_C$) at the capacitor (94) is detectable, which voltage has a comparably decreasing profile to the decreasing circulating current (i*, i*').

12. Motor according to one of Claims 9 to 11, in which the profile of the charging voltage ($u_C$) of the capacitor (94) is offset by an amplitude offset relative to the profile of the current ($i_R$) flowing in the detecting device (64).

13. Motor according to Claim 12, in which, owing to the amplitude offset, the voltage ($u_C$) to be digitised is displaced into another measuring region of the assigned A/D converter (100).

14. Motor according to one of the preceding claims, in which the A/D conversion is controlled such that it is initiated outside the switching edges (180, 186, 185) of the PWM signal (pwm1, pwm2, pwm3, pwm4).

15. Motor according to one of the preceding claims, in which the A/D conversion (310) is controlled such that it is initiated during the flowing of a circulating current (i*, i*').


**Revendications**

1. Moteur (20) à commutation électronique, qui présente :

une première borne (46) destinée au raccordement à un pôle positif d'une source de tension continue (47) ;
une deuxième borne (50) destinée au raccordement à un pôle négatif (50) de cette source de tension continue (47) ;
un stator avec un ensemble d'enroulement statorique qui présente au moins une branche d'enroulement (26) ;
un rotor (28) à aimants permanents qui, en fonctionnement, influe lors de sa rotation sur la forme du courant ($i_1$, $i_1$') dans l'ensemble d'enroulement statorique (26) ;
un ensemble de détection (64), qui est conçu pour détecter et numériser, à intervalles de temps, un courant apporté au moteur (20) à partir de la source de tension continue (47),
ledit courant circulant en fonctionnement de la première borne (46) à la deuxième borne (50) en passant par l'ensemble de détection (64) ;
un calculateur (36) commandé par programme ;
un dispositif de mesure (36, 79, 181, 182, 184) pour mesurer la tension d'alimentation ($U_B$), qui est conçu pour numériser une valeur fonction de cette tension ($U_B$),
sachant qu'au moins un élément (T3, T4) du pont en H (22) peut être commandé par un signal MLI (pwm3, pwm4) dont le taux d'impulsions possède une valeur qui, lors d'une modification de la tension d'alimentation ($U_B$) du moteur (20), compense au moins quasiment cette modification de tension, afin d'apporter au moteur en fonctionnement une tension continue ($U_m$) approximativement constante,
sachant que le calculateur (36) commandé par programme est conçu pour poursuivre la mesure de la tension d'alimentation ($U_B$) également après la mise sous tension du moteur afin, lors d'une modification de la tension d'alimentation ($U_B$), d'adapter également pendant le fonctionnement du moteur le taux d'impulsions (pwm1, pwm2 ;
pwm3, pwm4) du signal MLI au niveau momentané de la tension d'alimentation ($U_B$), sachant que la valeur absolue du courant de moteur ($i_1$, $i_1$') présente en fonctionnement plusieurs parties, comme suit :

une première partie (113), appelée ci-après ventre de courant, qui croît à partir de la commutation (118, 118') jusqu'à un maximum (114) de la valeur absolue,

une deuxième partie (115), appelée ci-après selle de courant, qui décroît à partir du maximum (114) jusqu'à un minimum (116) de la valeur absolue,

une troisième partie (117), appelée ci-après queue de courant, qui fait suite à la selle de courant (115) ;

et sachant que le calculateur (36) commandé par programme est conçu pour exécuter les étapes suivantes :

a) déterminer la position du ventre de courant (113) à partir des valeurs numérisées de courant ;

b) déterminer la position de la selle de courant (115) à partir des valeurs numérisées de courant ;

c) déterminer, à partir des valeurs détectées du courant au ventre de courant (113) et/ou à la selle de courant (115), une valeur de courant (118, 118') à laquelle une opération de commutation doit commencer ;

d) lancer l'opération de commutation si le courant de moteur ($i_1$, $i_1$') atteint ou dépasse cette valeur de courant (118, 118').

2. Moteur selon la revendication 1, dans lequel le calculateur (36) commandé par programme est conçu pour exécuter les étapes suivantes :

a) comparer les valeurs absolues de valeurs numérisées de courant se succédant dans le temps, afin de déterminer par ces comparaisons un maximum (114) apparaissant dans la région du ventre de courant (113), et d'enregistrer une valeur numérisée de courant (Max) associée à ce maximum (114) ;

b) comparer les valeurs numérisées déterminées successivement dans le temps, afin de déterminer dans la région de la selle de courant (115) un minimum (116) de la valeur absolue consécutif à ce maximum (114).

3. Moteur selon la revendication 2, dans lequel le calculateur (36) commandé par programme est conçu pour exécuter les étapes suivantes :

à la suite de la détermination du maximum (114) dans la région du ventre de courant (113), on attend jusqu'à ce que la différence entre la valeur de courant associée à ce maximum (114) et la valeur momentanée du courant ait atteint une valeur minimale prédéfinie, avant de déterminer le minimum (116) de la valeur absolue consécutif à ce maximum (114).

4. Moteur selon la revendication 3, dans lequel, si la valeur minimale prédéfinie ne peut pas être déterminée, la détermination du minimum (116) est remplacée par une mesure de correction prédéfinie.

5. Moteur selon la revendication 4, dans lequel, comme mesure de correction, le courant dans l'ensemble d'enroulement statorique (26) est commuté sur une direction de courant qui est associée à une autre direction de rotation.

6. Moteur selon la revendication 4 ou 5, dans lequel, comme mesure de correction, le moteur (20) est mis au moins temporairement hors tension, afin d'éviter une surchauffe en cas de blocage du moteur.

7. Moteur selon l'une des revendications précédentes, dans lequel le calculateur (36) commandé par programme est conçu pour effectuer une mesure (S202) de la tension d'alimentation ($U_B$) à la suite de la mise sous tension du moteur, afin de pouvoir déterminer et régler à cet instant un taux d'impulsions approprié (pwm1, pwm2 ; pwm3, pwm4) du signal MLI.

8. Moteur selon l'une des revendications précédentes, dans lequel, en fonctionnement, au moins un élément (T3, T4) du pont en H (22) peut être activé et désactivé par un signal MLI (pwm3, pwm4), de sorte que, dans l'état activé de cet élément en fonctionnement, un courant ($I_R$) circule de la première borne (46) à la deuxième borne (50) en passant par cet élément et par l'ensemble de détection (64), ledit courant ($I_R$) pouvant être détecté par l'ensemble de détection (64),

et que, dans l'état désactivé de cet élément (T3, T4), un courant circulaire décroissant ($i^*$, $i^*$') circule dans le pont en H (22).

9. Moteur selon la revendication 8, dans lequel l'ensemble de mesure (80) présente un condensateur (94), dont la tension de charge ($u_c$), dans l'état activé dudit élément (T3, T4), est une fonction du courant de moteur ($I_R$) détecté par l'ensemble de détection (64, 80) et sert elle-même de base pour la détection et la numérisation du courant de moteur,

et auquel est associé un circuit de décharge (96) afin de produire, pendant la circulation d'un courant circulaire (i*, i*'), une tension de charge décroissante ($u_c$) au condensateur (94), laquelle convient comme base pour la mesure du courant pendant la circulation de ce courant circulaire (i*, i*').

10. Moteur selon la revendication 8 ou 9, dans lequel, en fonctionnement, le courant circulaire (i*, i*') décroît selon une première constante de temps ($\tau_W$) qui est principalement influencée par les caractéristiques électriques (L, R) de la branche d'enroulement (26) à travers laquelle circule ce courant circulaire (i*, i*'),

et dans lequel la tension de charge ($u_c$), en fonctionnement, décroît avec une deuxième constante de temps ($\tau_c$) qui lui est adaptée, qui est influencée par les caractéristiques électriques du condensateur (94) et de son circuit de décharge (96).

11. Moteur selon la revendication 10, dans lequel la première constante de temps ($\tau_W$) et la deuxième constante de temps ($\tau_c$) sont mutuellement adaptées, de sorte que, pendant la circulation d'un courant circulaire (i*, i*'), on peut détecter au condensateur (94) une tension de charge ($u_c$) qui possède une allure décroissante comparable à celle du courant circulaire décroissant (i*, i*').

12. Moteur selon l'une des revendications 9 à 11, dans lequel l'allure de la tension de charge ($u_c$) du condensateur (94) est décalée d'un décalage d'amplitude par rapport à l'allure du courant ($I_R$) circulant dans le dispositif de détection (64).

13. Moteur selon la revendication 12, dans lequel, par le décalage d'amplitude, la tension ($u_c$) à numériser est déplacée dans une autre plage de mesure du convertisseur A/N associé (100).

14. Moteur selon l'une des revendications précédentes, dans lequel la conversion A/N est commandée de telle sorte qu'elle est déclenchée en dehors des flancs de commutation (180, 186, 185) du signal MLI (pwm, pwm1, pwm2, pwm3, pwm4).

15. Moteur selon l'une des revendications précédentes, dans lequel la conversion A/N (310) est commandée de telle sorte qu'elle est déclenchée pendant la circulation d'un courant circulaire (i*, i*').

*FIG. 1*

$U_B$ = const.

$$pwmA = \frac{t_1}{T_P} * 100\%$$

Fig. 2A

$U_B \downarrow$

$$pwmB = \frac{t_1}{T_P}$$

Fig. 2B

$U_B \uparrow$

$$pwmC = \frac{t_1}{T_P}$$

Fig. 2C

Fig. 2

FIG. 3

*FIG. 4*

FIG. 5

FIG. 6

FIG. 7

*FIG. 8*

*FIG. 9*

Fig. 10

Fig. 11

S250

S252

S254

S256

S258

S260

S262

S264

S266

S268

S270

S272

S274

Y

N

Fig. 12

Fig. 13

Fig. 14

*FIG. 15*

38

FIG. 16

*FIG. 17*

40

FIG. 18

Fig. 19

**EP 2 603 971 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2086104 A2
- EP 2107677 A2

- DE 10161992